# EUROPEAN PATENT APPLICATION

(11) **EP 4 803 580 A2**
(43) Date of publication of application: **09.09.2026**
(21) Application number: 26194018.3
(22) Date of filing: 03.06.2024
(51) Int. Cl.: C08L 83/10

(54) **POLYCARBONATE COPOLYMER COMPOSITIONS**

(30) Priority: 02.06.2023 EP 23177013
(62) Document number(s) of the earlier application(s) in accordance with Art. 76 EPC: 24751328.6 / 4 720 194
(71) Applicant: SHPP Global Technologies B.V., 4612 PX Bergen op Zoom (NL)
(72) Inventor: HAGENAARS, Arno C., 4612PX Bergen op Zoom (NL); VAN DER MEE, Mark Adrianus Johannes, 4612PX Bergen op Zoom (NL); ASSINK, Roland Sebastian, 4612PX Bergen op Zoom (NL); LUGGER, Jody Ann Martin, 4612PX Bergen op Zoom (NL); AKKERMANS, Petrus Jacobus, 4612PX Bergen op Zoom (NL)
(74) Representative: Balder IP Law, S.L.

(57) **Abstract**

The polycarbonate compositions are reinforced and include either (1) a combination of a bromine-containing polycarbonate copolymer, poly(carbonate-siloxane), or (2) a poly(ester-carbonate-siloxane) and an organophosphorus flame retardant, resulting in robust smoke density and heat release meeting R6-HL2 and retaining impact properties. Molded or extruded samples of the disclosed polycarbonate compositions have: a smoke density after 4 minutes (DS-4) of 300 or less, measured in accordance with ISO 5659-2 on a 3 mm thick plaque at 50 kW/m²; an integral of smoke density as a function of time after 4 minutes (VOF4) of 600 or less, measured in accordance with ISO 5659-2 on a 3 mm thick plaque at 50 kW/m²; a maximum average heat release (MAHRE) of 90 kW/m² or less, measured in accordance with ISO 5660-1 on a 3 mm thick plaque at 50 kW/m²; a critical heat flux at extinguishment (CFE) of 20 kW/m² or greater, measured in accordance with ISO 5658-2 on a 3 mm thick plaque; or a combination thereof.

## Description

### BACKGROUND

The harmonized fire standard for rail applications, EN-45545, imposes stringent requirements on heat release, smoke density, and toxicity and flame spread properties allowed for materials used in rail applications in the European Union.

As set-forth in the requirements of EN-45545, "Hazard Levels" (HL1 to HL3) have been designated, reflecting the degree of probability of personal injury as the result of a fire. The levels are based on dwell time and are related to operation and design categories. HL1 is the lowest hazard level and is typically applicable to vehicles that run under relatively safe conditions (easy evacuation of the vehicle). HL3 is the highest hazard level and represents most dangerous operation/design categories (difficult and/or time-consuming evacuation of the vehicle, e.g., in underground rail cars). EN-45545 classifies products are classified into 26 requirements sets (R1-R26). R1 includes horizontal and vertical interior surfaces and R6 includes passenger seat shell and coverings. For each product type, different test requirements for the hazard levels are defined.

Polycarbonates are useful in the manufacture of articles and components for a wide range of applications, from automotive parts to electronic appliances. Because of their broad use, particularly in rail interiors, it is desirable to provide polycarbonate compositions with properties that meet or exceed the requirements set-forth under EN-45545. However, it is particularly challenging to manufacture articles that meet the requirements of EN-45545 and that have good mechanical properties, including high stiffness, high strength, good impact strength, and/or good processability.

Accordingly, there remains a need for polycarbonate compositions that have a combination of properties, including lower smoke density, lower heat release, improved critical heat flux at extinguishment, and/or low flame spread properties. It would be a further advantage if the polycarbonate compositions could be made at a low material cost, with manufacturing ease, and with desirable mechanical properties.

### SUMMARY

Provided is a polycarbonate composition including 10 to 70 wt% of a bromine-containing polycarbonate copolymer; 5 to 60 wt% of a poly(carbonate-siloxane), present in an amount effective to provide 0.5 to 10 wt% of total siloxane, based on the total weight of the polycarbonate composition; 5 to 30 wt% of a glass-containing reinforcing agent; optionally, 0.1 to 40 wt% homopolycarbonate; optionally, up to 20 wt% of a mineral filler, preferably wherein the mineral filler comprises talc, kaolin, calcium silicate, calcinated kaolin, calcium carbonate, wollastonite, or a combination thereof; optionally, an organophosphorous flame retardant in amount effective to provide up to 1.5 wt% of phosphorous, based on the total weight of the polycarbonate composition; and optionally, up to 10 wt% of an additive composition, wherein the amount of bromine-containing polycarbonate copolymer, poly(carbonate-siloxane), glass-containing reinforcing agent, optional homopolycarbonate, optional mineral filler, optional organophosphorous flame retardant, and optional additive composition total 100 wt%, wherein a molded or extruded sample of the composition has: a smoke density after 4 minutes (DS-4) of 300 or less, measured in accordance with ISO 5659-2 on a 3 mm thick plaque at 50 kW/m²; an integral of smoke density as a function of time after 4 minutes (VOF4) of 600 or less, measured in accordance with ISO 5659-2 on a 3 mm thick plaque at 50 kW/m²; a maximum average heat release (MAHRE) of 90 kW/m² or less, measured in accordance with ISO 5660-1 on a 3 mm thick plaque at 50 kW/m²; a critical heat flux at extinguishment (CFE) of 20 kW/m² or greater, measured in accordance with ISO 5658-2 on a 3 mm thick plaque; or a combination thereof.

Also provided is a polycarbonate composition comprising: poly(ester-carbonate-siloxane) comprising bisphenol carbonate units, isophthalate-terephthalate-bisphenol ester units, and siloxane units; an organophosphorous flame retardant in amount effective to provide up to 1.5 wt% of phosphorous, based on the total weight of the polycarbonate composition; 5 to 30 wt% of a glass-containing reinforcing agent; optionally, a poly(carbonate-siloxane), present in an amount effective to provide less than 2.4 wt% of total siloxane, based on the total weight of the polycarbonate composition; optionally, 0.1 to 40 wt% of a homopolycarbonate; optionally, up to 20 wt% of a mineral filler, preferably wherein the mineral filler comprises talc, kaolin, calcium silicate, calcinated kaolin, calcium carbonate, wollastonite, or a combination thereof; optionally, up to 10 wt% of an additive composition, wherein the amount of polycarbonate-ester-siloxanes, poly(carbonate-siloxane), glass-containing reinforcing agent, optional homopolycarbonate, optional mineral filler, organophosphorous flame retardant, and optional additive composition total 100 wt%, wherein a molded or extruded sample of the composition has: a smoke density after 4 minutes (DS-4) of 300 or less, measured in accordance with ISO 5659-2 on a 3 mm thick plaque at 50 kW/m²; an integral of smoke density as a function of time after 4 minutes (VOF4) of 600 or less, measured in accordance with ISO 5659-2 on a 3 mm thick plaque at 50 kW/m²; a maximum average heat release (MAHRE) of 90 kW/m² or less, measured in accordance with ISO 5660-1 on a 3 mm thick plaque at 50 kW/m²; a critical heat flux at extinguishment (CFE) of 20 kW/m² or greater, measured in accordance with ISO 5658-2 on a 3 mm thick plaque; or a combination thereof.

Also provided is an article including either of the above-referenced polycarbonate compositions, preferably wherein the article is a railway component, preferably an interior railway component, more preferably wherein the article comprises a seat component, an extruded interior cladding, a molded interior cladding, a side wall, a front wall, an end wall, a partition, a room divider, a flap, a box, a hood, a louvre, a ceiling panel, a table tray, a head rest, a privacy divider, a center console, an arm rest, a leg rest, a food tray, an end bay, a shroud, a kick panel, a foot well, literature pocket, a monitor, a bezel, a line replaceable unit, a foot bar, a luggage rack, a luggage container, a luggage compartment, a floor composite, a wall composite, an air duct, a strip, a device for passenger information, a window frame, an interior lining, an interior vertical surface, an interior door, a lining for an internal door, a lining for an external door, an interior horizontal surface, an electrical component, or a lighting component. Further provided is a method for forming the article, wherein the method includes molding, casting, or extruding the polycarbonate composition.

### DETAILED DESCRIPTION

The inventors hereof have discovered polycarbonate compositions having low smoke density characteristics (DS-4, measured according to ISO5659-2), low heat release characteristics (MAHRE, measured according to ISO5660-1), improved integral of smoke density as a function of time (VOF₄, measured according to ISO5659-2), and/or an improved critical heat flux at extinguishment (CFE, measured according to ISO 5658-2).

It is exceptionally challenging to manufacture materials that meet stringent smoke density standards, heat release standards, and/or flame spread standards in addition to meeting or exceeding other material requirements while also providing a low material cost, manufacturing ease, and good mechanical properties. Advantageously, the inventors have discovered that compositions including a bromine-containing polycarbonate copolymer, poly(carbonate-siloxane), and a glass-containing reinforcing agent provide the desired smoke density and heat release characteristics while also providing good stiffness and impact. This was surprising and unexpected because high loadings of inorganic fillers like glass or minerals typically will result in improved fire properties at the expense of impact properties, processability, and/or color capability. However, the inventors discovered that polycarbonate compositions including either (1) a combination of a bromine-containing polycarbonate copolymer, poly(carbonate-siloxane), and a glass-containing reinforcing agent, or (2) a poly(ester-carbonate-siloxane), an organophosphorus flame retardant, and 5 to 30 wt% of a glass-containing reinforcing agent resulted in robust smoke density and heat release meeting R6-HL2 and retaining impact properties.

In a particularly advantageous feature, the polycarbonate compositions have a smoke density after 4 minutes (DS-4) of 300 or less, measured in accordance with ISO 5659-2 on a 3 mm thick plaque at 50 kW/m²; an integral of smoke density as a function of time after 4 minutes (VOF4) of 600 or less, measured in accordance with ISO 5659-2 on a 3 mm thick plaque at 50 kW/m²; a maximum average heat release (MAHRE) of 90 kW/m² or less, measured in accordance with ISO 5660-1 on a 3 mm thick plaque at 50 kW/m²; a critical heat flux at extinguishment (CFE) of 20 kW/m² or greater, measured in accordance with ISO 5658-2 on a 3 mm thick plaque; or a combination thereof. In some aspects, the polycarbonate composition can have each of these properties at the same time.

In some aspects, the polycarbonate compositions include 10 to 70 wt% of a bromine-containing polycarbonate copolymer; 5 to 60 wt% of a poly(carbonate-siloxane); and 5 to 30 wt% of a glass-containing reinforcing agent. In some aspects, the polycarbonate compositions include a poly(ester-carbonate-siloxane), an organophosphorus flame retardant, and 5 to 30 wt% of a glass-containing reinforcing agent.

The term "polycarbonate" as used herein means a polymer or copolymer having repeating structural carbonate units of formula (1) 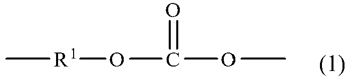
wherein at least 60% of the total number of R¹ groups contain aromatic moieties and the balance thereof are aliphatic, alicyclic, or aromatic. In one or more aspects, each R¹ is a C₆₋₃₀ aromatic group. R¹ may be derived from an aromatic dihydroxy compound of the formula HO-R¹-OH, in particular of formula (2)

   HO-A¹-Y¹-A²-OH (2)
wherein each of A¹ and A² is a monocyclic divalent aromatic group and Y¹ is a single bond or a bridging group having one or more atoms that separate A¹ from A². In one or more aspects, one atom separates A¹ from A². Preferably, each R¹ may be derived from a bisphenol of formula (3) 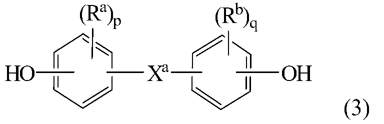
wherein R^{a} and R^{b} are each independently a halogen, C₁₋₁₂ alkoxy, or C₁₋₁₂ alkyl, and p and q are each independently integers of 0 to 4. It will be understood that when p or q is less than 4, the valence of each carbon of the ring is filled by hydrogen. X^{a} is a bridging group connecting the two hydroxy-substituted aromatic groups, where the bridging group and the hydroxy substituent of each C₆ arylene group are disposed ortho, meta, or para (preferably para) to each other on the C₆ arylene group. In one or more aspects, the bridging group X^{a} is single bond, -O-, -S-, -S(O)-, -S(O)₂-, -C(O)-, or a C₁₋₆₀ organic group. The organic bridging group may be cyclic or acyclic, aromatic or non-aromatic, and may further comprise heteroatoms such as halogens, oxygen, nitrogen, sulfur, silicon, or phosphorous. The ₁₋₆₀ organic group may be disposed such that the C₆ arylene groups connected thereto are each connected to a common alkylidene carbon or to different carbons of the C₁₋₆₀ organic bridging group. In one or more aspects, p and q is each 1, and R^{a} and R^{b} are each a C₁₋₃ alkyl group, preferably methyl, disposed meta to the hydroxy group on each arylene group.

Other exemplary dihydroxy compounds of the formula HO-R¹-OH include aromatic dihydroxy compounds of formula (4) 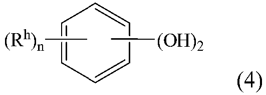 wherein each R^{h} is independently a halogen atom, C₁₋₁₀ hydrocarbyl group such as a C₁₋₁₀ alkyl, a halo-substituted C₁₋₁₀ alkyl, a C₆₋₁₀ aryl, or a halo-substituted C₆₋₁₀ aryl, and n is 0 to 4.

Exemplary dihydroxy compounds include, but are not limited to, 4,4'-dihydroxydiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or a combination thereof.

Specific examples of bisphenol compounds of formula (3) include 1,1-bis(4-hydroxyphenyl) methane, 1,1-bis(4-hydroxyphenyl) ethane, 2,2-bis(4-hydroxyphenyl) propane ("bisphenol-A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-2-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), 1,1-bis(4-hydroxy-3-methylphenyl)cyclohexane (DMBPC), or a combination thereof.

The polycarbonates may have an intrinsic viscosity, as determined in chloroform at 25°C, of 0.3 to 1.5 deciliters per gram (dL/g), preferably 0.45 to 1.0 dL/g. The polycarbonates may have a weight average molecular weight (Mw) of 10,000 to 200,000 grams per mole (g/mol), preferably 20,000 to 100,000 g/mol, as measured by gel permeation chromatography (GPC), using a crosslinked styrene-divinylbenzene column using polystyrene standards and calculated for polycarbonate. GPC samples are prepared at a concentration of 1 mg/mL, and are eluted at a flow rate of 1.5 mL/min.

The polycarbonate compositions of the present disclosure optionally include a homopolycarbonate (wherein each R¹ in the polymer is the same). The optional homopolycarbonate may be one or more linear homopolycarbonates, one or more branched homopolycarbonates, or a combination of a linear homopolycarbonate and a branched homopolycarbonate. In one or more aspects, the optional homopolycarbonate in the polycarbonate composition is derived from a bisphenol of formula (2), preferably bisphenol A, in which each of A¹ and A² is p-phenylene and Y¹ is isopropylidene in formula (2). The optional homopolycarbonate may be present from 0.1 to 40 wt%, from 0.1 to 35 wt%, from 0.1 to 30 wt%, from 0.1 to 25 wt%, from 0.1 to 20 wt%, 0.1 to 15 wt%, or from 0.1 to 10 wt%, based on the total weight of the composition.

The optional homopolycarbonate may have a weight average molecular weight of 28,000 to 45,000, as determined by GPC using polystyrene standards and calculated for polycarbonate. The inventors unexpectedly discovered that when the molecular weight is within this range, that the achievement of the desired combination of properties is robust, for example, a smoke density (DS-4) of less than or equal to 300, a heat release (e.g., MAHRE) of less than or equal to 90 kW/m², and a critical heat flux at extinguishment of greater than 20 kW/m². The robustness of experimental results refers to the consistency of those results across several trials. For example, in some aspects, the optional homopolycarbonate is a bisphenol A homopolycarbonate. One or more bisphenol A homopolycarbonates may be used, provided that the average weight average molecular weight of the combination of bisphenol A homopolycarbonates is 28,000 to 45,000, as determined by GPC using polystyrene standards and calculated for polycarbonate. The bisphenol A homopolycarbonate(s) may have a melt flow rate (MFR) of 3 to 140, per 10 min at 300°C and a 1.2-kilogram (kg) load and a Mw of 17,000 to 40,000 g/mol, or 20,000 to 30,000 g/mol, or 21,000 to 23,0000 g/mol, each as measured as described above. In some aspects, the homopolycarbonate comprises a linear bisphenol A homopolycarbonate. In some aspects, the homopolycarbonate comprises a linear bisphenol A homopolycarbonate having a Mw of 28,000 to 45,000 g/mol, or 28,000 to 40,000 g/mol, or 28,000 to 36,000 g/mol, each as determined by GPC using polystyrene standards and calculated for polycarbonate In certain aspects, the homopolycarbonate is one linear bisphenol A homopolycarbonate having a Mw of 28,000 to 45,000 g/mol, or 28,000 to 40,000 g/mol, or 28,000 to 36,000 g/mol, each as determined by GPC using polystyrene standards and calculated for polycarbonate.

"Polycarbonates" include homopolycarbonates (wherein each R¹ in the polymer is the same) and copolymers comprising different R¹ moieties in the carbonate ("copolycarbonates"), and copolymers comprising carbonate units and other types of polymer units, such as ester units or siloxane units.

In some aspects, the polycarbonate compositions include 10 to 70 wt% of a bromine-containing polycarbonate copolymer; 5 to 60 wt% of a poly(carbonate-siloxane); and 5 to 30 wt% of a glass-containing reinforcing agent. The bromine-containing polycarbonate copolymer may be a brominated polycarbonate oligomer derived from brominated aromatic dihydroxy compounds (e.g., brominated compounds of formula (1)) and a carbonate precursor, or from a combination of brominated and non-brominated aromatic dihydroxy compounds, e.g., of formula (1), and a carbonate precursor. Brominated polycarbonate oligomers are disclosed, for example, in U.S. Pat. Nos. 4,923,933, 4,170,711, and 3,929,908. Examples of brominated aromatic dihydroxy compounds include 2,2-bis(3,5-dibromo-4-hydroxyphenyl)propane, bis(3,5-dibromo-4-hydroxyphenyl)menthanone, and 2,2',6,6'-tetramethyl-3,3',5,5'-tetrabromo-4,4'-biphenol.

Examples of non-brominated aromatic dihydroxy compounds for copolymerization with the brominated aromatic dihydroxy compounds include bisphenol A, bis(4-hydroxyphenyl)methane, 2,2-bis(4-hydroxy-3-methylphenyl)propane, 4,4-bis(4-hydroxyphenyl)heptane, and (3,3'-dichloro-4,4'-dihydroxydiphenyl)methane. Combinations of two or more different brominated and non-brominated aromatic dihydroxy compounds can be used. If a combination of aromatic dihydroxy compounds is used, then the combinations can contain 25 to 55 mol% of the brominated aromatic dihydroxy compounds and 75 to 65 mol% of a non-brominated dihydric phenol. Various endcaps can be present, for example polycarbonates having phenol endcaps or 2,4,6-tribromophenol endcaps can be used.

In some aspects, a bromine-containing polycarbonate copolymer can include brominated carbonate units derived from 2,2',6,6'-tetrabromo-4,4'-isopropylidenediphenol (TBBPA) and carbonate units derived from at least one dihydroxy aromatic compound that is not TBBPA. The dihydroxy aromatic compound can be any one or more of those described herein. In a specific aspect, the dihydroxy aromatic compound is bisphenol A. The relative ratio of TBBPA to the dihydroxy aromatic compound used to manufacture the bromine-containing polycarbonate copolymer will depend in some aspects on the amount of the bromine-containing polycarbonate copolymer used and the amount of bromine desired in the polycarbonate composition. In one or more aspects, the bromine-containing polycarbonate copolymer is manufactured from a composition having 30 to 70 wt % of TBBPA and 30 to 70 wt % of the dihydroxy aromatic compound, specifically bisphenol A, or specifically 45 to 55 wt % of TBBPA and 45 to 55 wt % of the dihydroxy aromatic compound, specifically bisphenol A. In one or more aspects, no other repeating units are present in the bromine-containing polycarbonate copolymer. In some aspects, a combination of two or more different bromine-containing polycarbonate copolymers may be used. The bromine-containing polycarbonate copolymers can differ in one or more of a property (e.g., polydispersity or molecular weight) or a structural feature (e.g., the identity of the repeating units, the presence of copolymer units, or the amount of bromine in the polymer).

The bromine-containing polycarbonate may have a bromine content of 10 to 50 wt%, 15 to 40 wt%, 20 to 30 wt%, or 24 to 27.5 wt% each based on the weight of the bromine-containing polycarbonate. Optionally the bromine-containing polycarbonate can have phenol or 2,4,6-tribromophenol endcaps. The bromine-containing polycarbonate can have an intrinsic viscosity of 0.2 to 1.5 deciliter per gram, measured in methylene chloride at 25°C. Within this range, the intrinsic viscosity can be 0.4 to 1 deciliter per gram. The bromine-containing polycarbonate copolymer can have a Mw from 18,000 to 30,000 g/mol, or 20,000 to 30,000 g/mol, as measured by gel permeation chromatography (GPC) using polystyrene standards.

The bromine-containing polycarbonate is present in an amount effective to provide 1 to 20 wt% bromine content, based on the total weight of the polycarbonate composition. Within this range, the bromine-containing polycarbonate may be present in an amount effective to provide 1 to 15 wt%, 1 to 10 wt%, 1.5 to 10 wt%, 2 to 9 wt%, of 2 to 8.5 wt%, or 2 to 8 wt%, or 1 to 5 wt% bromine content, each based on the total weight of the polycarbonate composition.

In some aspects, the bromine-containing polycarbonate may have a bromine content of 20 to 30 wt%, or 24 to 27.5 wt%, each based on the weight of the bromine-containing polycarbonate and the bromine-containing polycarbonate may be present in an amount effective to provide 1 to 15 wt%, 1 to 10 wt%, 1.5 to 10 wt%, 2 to 9 wt%, of 2 to 8.5 wt%, or 2 to 8 wt%, or 1 to 5 wt% bromine content, each based on the total weight of the polycarbonate composition.

Polycarbonates may be manufactured by processes such as interfacial polymerization and melt polymerization, which are known, and are described, for example, in WO 2013/175448 A1 and WO 2014/072923 A1.

Branched polycarbonate blocks may be prepared by adding a branching agent during polymerization, for example trimellitic acid, trimellitic anhydride, trimellitic trichloride, tris-p-hydroxyphenylethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents may be added at a level of 0.05 to 4.0 wt%, or 0.25 to 2.0 wt%, based on the total weight of the composition. Combinations comprising linear polycarbonates and branched polycarbonates may be used.

An end-capping agent (also referred to as a chain stopper agent or chain terminating agent) may be included during polymerization to provide end groups. The end-capping agent (and thus end groups) are selected based on the desired properties of the polycarbonates. Exemplary end-capping agents are exemplified by monocyclic phenols such as phenol and C₁₋₂₂ alkyl-substituted phenols such as p-cumyl-phenol, resorcinol monobenzoate, and p-and tertiary-butyl phenol, monoethers of diphenols, such as p-methoxyphenol, and alkyl-substituted phenols with branched chain alkyl substituents having 8 to 9 carbon atoms, 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, mono-carboxylic acid chlorides such as benzoyl chloride, C₁₋₂₂ alkyl-substituted benzoyl chloride, toluoyl chloride, bromobenzoyl chloride, cinnamoyl chloride, and 4-nadimidobenzoyl chloride, polycyclic, mono-carboxylic acid chlorides such as trimellitic anhydride chloride, and naphthoyl chloride, functionalized chlorides of aliphatic monocarboxylic acids, such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups may be used.

In some aspects, the polycarbonate compositions include a poly(ester-carbonate-siloxane). These polycarbonate compositions are different from the polycarbonate compositions including a bromine-containing polycarbonate copolymer. The polycarbonate compositions including a poly(ester-carbonate-siloxane include a poly(ester-carbonate-siloxane), an organophosphorus flame retardant, and 5 to 30 wt% of a glass-containing reinforcing agent.

The poly(ester-carbonate-siloxane)s include bisphenol carbonate units, isophthalate-terephthalate-bisphenol ester units, and siloxane units. The bisphenol carbonate units were described above and the siloxane units are described below. The isophthalate-terephthalate- ester of the units isophthalate-terephthalate-bisphenol ester units may have the following formula (5) 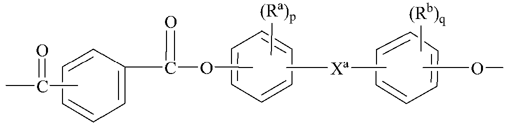 wherein, in the foregoing formulae, R^{a} and R^{b} are each independently a C₁₋₁₂ alkyl, p and q are each independently integers of 0 to 4, and X^{a} is a single bond, -O-, -S-, -S(O)-, -S(O)₂-, -C(O)-, or a C₁₋₁₃ alkylidene of formula -C(R^{c})(R^{d}) - wherein R^{c} and R^{d} are each independently hydrogen or C₁₋₁₂ alkyl, or a group of the formula -C(=R^{e})- wherein R^{e} is a divalent C₁₋₁₂ hydrocarbon group. The isophthalate-terephthalate-bisphenol ester units can be bisphenol A phthalate ester units of the formula (5a)

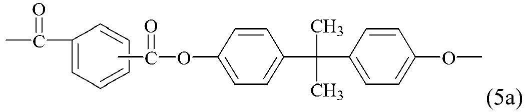

In addition to the isophthalate-terephthalate-bisphenol ester units, the poly(ester-carbonate-siloxane)s may include resorcinol carbonate units of formula (6) 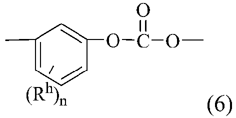 wherein, in the foregoing formulae, R^{h} is each independently a C₁₋₁₀ hydrocarbon group and n is 0-4.

The poly(ester-carbonate-siloxane) may include bisphenol A carbonate units, isophthalate-terephthalate-bisphenol A ester units, and siloxane units, wherein the siloxane units are blocks containing 5 to 200 dimethylsiloxane units. The poly(ester-carbonate-siloxane) may be present in an amount effective to provide up to 1.2 wt%, up to 1.1 wt%, or up to 1.0 wt% siloxane content, based on the total weight of the polycarbonate composition. Within this range, the poly(ester-carbonate-siloxane) may be present in an amount effective to provide 0.2 to 1.1 wt%, or 0.4 to 1 wt%, siloxane content, based on the total weight of the polycarbonate composition.

The polycarbonate compositions may include a poly(carbonate-siloxane), also referred to as a "polycarbonate-polysiloxane copolymer" and is present in an amount effective to provide 0.5 to 10 wt% of total siloxane, based on the total weight of the polycarbonate composition. The polysiloxane blocks comprise repeating diorganosiloxane units, including those of formula (9): 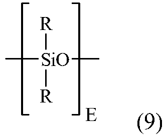 wherein each R is independently a C₁₋₁₃ monovalent organic group. For example, R may be a C₁₋₁₃ alkyl, C₁₋₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkylene, C₇₋₁₃ arylalkylenoxy, C₇₋₁₃ alkylarylene, or C₇₋₁₃ alkylaryleneoxy. The foregoing groups may be fully or partially halogenated with fluorine, chlorine, bromine, or iodine, or a combination thereof. Combinations of the foregoing R groups may be used in the same copolymer.

The value of E in formula (9) has an average value of 2 to 1,000, preferably 2 to 500, or 2 to 200, or 2 to 125, or 5 to 80, or 10 to 70. In one or more aspects, E has an average value of 10 to 80 or 10 to 40, and in still another aspect, E has an average value of 40 to 80, or 40 to 70. A combination of a first and a second (or more) poly(carbonate-siloxane) copolymers may be used, wherein the average value of E of the first copolymer is less than the average value of E of the second copolymer.

In one or more aspects, the polysiloxane blocks are of formula (10) 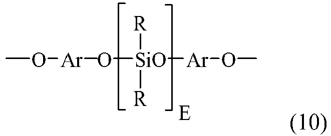 wherein E and R are as defined in formula (9), each R may be the same or different, and is as defined in formula (9); and each Ar is the same or different, and is a substituted or unsubstituted C₆₋₃₀ arylene. Ar groups in formula (10) may be derived from a C₆₋₃₀ dihydroxyarylene compound. Exemplary dihydroxyarylene compounds include 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), 1,1-bis(4-hydroxy-t-butylphenyl) propane, or the like, or a combination thereof.

In another aspect, polysiloxane blocks may be of formula (11) 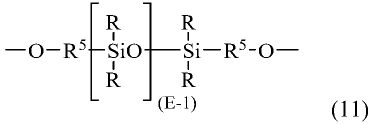
wherein R and E are as defined in formula (9), and each R⁵ is independently a divalent C₁₋₃₀ organic group, and wherein the polymerized polysiloxane unit is the reaction residue of its corresponding dihydroxy compound. In a specific aspect, the polysiloxane blocks may be of formula (12): 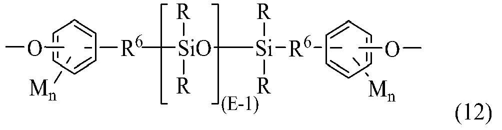
wherein R and E are as defined in formula (9). R⁶ in formula (12) is a divalent C₂₋₈ aliphatic group. Each M in formula (12) is the same or different, and may be a halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ aralkyl, C₇₋₁₂ aralkoxy, C₇₋₁₂ alkylaryl, or C₇₋₁₂ alkylaryloxy, wherein each n is independently 0 to 4.

In one or more aspects, M is bromo or chloro; an alkyl such as methyl, ethyl, or propyl; an alkoxy such as methoxy, ethoxy, or propoxy; or an aryl such as phenyl, chlorophenyl, or tolyl; R⁶ is a dimethylene, trimethylene, or tetramethylene; and R is C₁₋₈ alkyl, C₁₋₈ haloalkyl, C₂₋₈ cyanoalkyl, or C₆₋₁₂ aryl. In another aspect, each R is methyl, or a combination of methyl and trifluoropropyl, or a combination of methyl and phenyl. In still another aspect, each R is methyl, each M is methoxy, n is 1, and R⁶ is a divalent C₁₋₃ aliphatic group. Specific polysiloxane blocks include one or more of formulae (13a), (13b), or (13c): 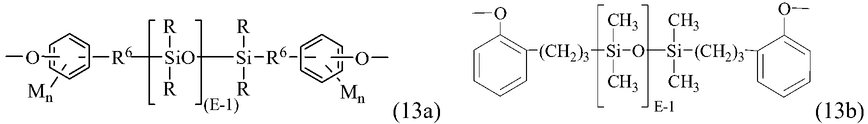 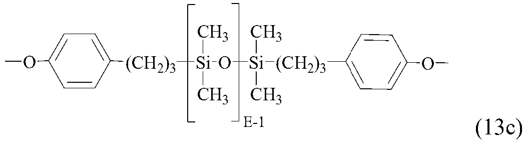 wherein E has an average value of 2 to 200, 2 to 125, 5 to 125, 5 to 100, 5 to 50, 20 to 80, or 5 to 20.

Blocks of formulae (13a) to (13c) may be derived from the corresponding dihydroxy polysiloxane, which in turn may be prepared effecting a platinum-catalyzed addition between the siloxane hydride and an aliphatically unsaturated monohydric phenol such as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The poly(carbonate-siloxane) copolymers may then be manufactured, for example, by the synthetic procedure of European Pat. Pub. No. 0524731 A1.

The poly(carbonate-siloxane) copolymers may comprise 50 to 99 wt% of carbonate units and 1 to 50 wt% of siloxane units. Within this range, the poly(carbonate-siloxane) copolymer may comprise 70 to 98 wt%, or 75 to 97 wt% of carbonate units and 2 to 45 wt%, or 5 to 10 wt%, or 30 to 45 wt% of siloxane units.

In one or more aspects, a blend of a bisphenol A homopolycarbonate and a poly(carbonate-siloxane) block copolymer of bisphenol A blocks and eugenol capped polydimethylsiloxane blocks, of the formula below, may be used: 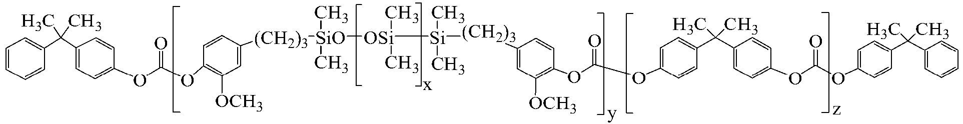 wherein x is 1 to 200, or 5 to 85, or 10 to 70, or 15 to 65, or 40 to 60; x is 1 to 500, or 10 to 200, and z is 1 to 1000, or 10 to 800. In one or more aspects, x is 1 to 200, y is 1 to 90, and z is 1 to 600, and in another aspect, x is 30 to 50, y is 10 to 30, and z is 45 to 600. The polysiloxane blocks may be randomly distributed or controlled distributed among the polycarbonate blocks.

In one or more aspects, the poly(carbonate-siloxane) copolymer comprises 30 to 70 wt%, or 35 to 65 wt%, or 35 to 55 wt%, or 35 to 45 wt% of the polysiloxane based on the total weight of the poly(carbonate-siloxane) copolymer.

The poly(carbonate-siloxane) copolymer may include a single poly(carbonate siloxane). In certain aspects, the polycarbonate compositions include a poly(carbonate-siloxane) copolymer comprising less than 10 wt% of siloxane content, a poly(carbonate-siloxane) copolymer comprising 30 to 70 wt% of siloxane content, or. a poly(carbonate-siloxane) copolymer comprising 10 to less than 30 wt% siloxane content. The poly(carbonate-siloxane) copolymer may include a combination of poly(carbonate-siloxane) copolymers, for example a combination of two or more of the foregoing. The polycarbonate compositions may include a poly(carbonate-siloxane) copolymer comprising less than 10 wt% siloxane content, a poly(carbonate-siloxane) copolymer comprising 10 to less than 30 wt% of siloxane content, a poly(carbonate-siloxane) copolymer comprising 30 to 70 wt% of siloxane content, or a combination thereof, each based on the total weight of each poly(carbonate-siloxane) copolymer. In some aspects, the polycarbonate compositions include a poly(carbonate-siloxane) copolymer comprising less than 10 wt% of siloxane content and a poly(carbonate-siloxane) copolymer comprising 10 to less than 30 wt% of siloxane content, each based on the total weight of each poly(carbonate-siloxane) copolymer. In some aspects, the polycarbonate compositions include a poly(carbonate-siloxane) copolymer comprising less than 10 wt% of siloxane content and a poly(carbonate-siloxane) copolymer comprising 30 to 70 wt% of siloxane content, each based on the total weight of each poly(carbonate-siloxane) copolymer. In some aspects, the polycarbonate compositions include a poly(carbonate-siloxane) copolymer comprising less than 10 wt% of siloxane content, a poly(carbonate-siloxane) copolymer comprising 10 to less than 30 wt% of siloxane content, a poly(carbonate-siloxane) copolymer comprising 30 to 70 wt% of siloxane content, each based on the total weight of each poly(carbonate-siloxane) copolymer.

The poly(carbonate-siloxane) may have a Mw of 2,000 to 100,000 g/mol, or 5,000 to 50,000 g/mol, as measured by GPC using a crosslinked styrene-divinyl benzene column, at a sample concentration of 1 mg/mL, using polystyrene standards. Within these ranges, the poly(carbonate-siloxane) may have a Mw of 21,000 to 50,000, or 25,000 to 50,000, or 30,000 to 45,000 g/mol.

The poly(carbonate-siloxane) may have an MFR, measured at 300°C/1.2 kg, of 1 to 50 cm³/10 min. Combinations of the poly(carbonate-siloxane)s of different flow properties may be used to achieve the overall desired flow property.

In the polycarbonate compositions including a bromine-containing polycarbonate copolymer, the one or more poly(carbonate-siloxane)s may be present in an amount effective to provide 0.5 to 10 wt% total siloxane content, based on the total weight of the polycarbonate composition. Within this range, the one or more poly(carbonate-siloxane)s may be present in amount effective to provide 1 to 10 wt%, 2 to 10 wt%, 3 to 10 wt%, 3.5 to 10 wt%, 4 to 10 wt%, 2 to 8 wt%, 3 to 8 wt%, 3.5 to 8 wt%, or 4 to 8 wt% total siloxane content based on the total weight of the polycarbonate composition. In some aspects , the polycarbonate compositions including a bromine-containing polycarbonate copolymer may include 0.5 to 10 wt% total siloxane content, based on the total weight of the polycarbonate composition. Within this range, the one or more poly(carbonate-siloxane)s may be present in amount effective to provide 1 to 10 wt%, 2 to 10 wt%, 3 to 10 wt%, 3.5 to 10 wt%, 4 to 10 wt%, 2 to 8 wt%, 3 to 8 wt%, 3.5 to 8 wt%, or 4 to 8 wt% total siloxane content based on the total weight of the polycarbonate composition.

In the polycarbonate compositions including a polycarbonate-ester-siloxane, the poly(carbonate-siloxane)s may be present in an amount effective to provide less than 2.4 wt% total siloxane content, based on the total weight of the polycarbonate composition. Within this range, the poly(carbonate-siloxane)s may be present in amount effective to provide up to 2.0 wt%, up to 1.5 wt%, or up to 1.0 wt% total siloxane content based on the total weight of the polycarbonate composition. The polycarbonate compositions including a polycarbonate-ester-siloxane may exclude a poly(carbonate-siloxane). As such, the polycarbonate compositions including a polycarbonate-ester-siloxane may include up to 1.2 wt%, up to 1.1 wt%, or up to 1.0 wt% siloxane content, based on the total weight of the polycarbonate composition. Within this range, the polycarbonate compositions including a polycarbonate-ester-siloxane may include 0.2 to 1.1 wt%, or 0.4 to 1 wt%, siloxane content, based on the total weight of the polycarbonate composition.

The polycarbonate composition further includes a glass-containing reinforcing agent. The term "glass" refers to a material, natural or synthetic, which contains silicon dioxide (SiO₂) or silica as its main material. Preferably, the glass-containing reinforcing agent is glass fiber, milled glass, glass bead, glass flake, or a combination thereof.

The glass fibers may be textile glass fibers such as E, A, C, ECR, R, S, D, and/or NE glass fibers, and are desirably E type glass fibers. The glass fibers may be provided in the form of monofilament or multifilament fibers and may be used either alone or in combination with other types of fibers, for example, co-weaving or core/sheath, side-by-side, skin-core type or matrix and fibril constructions. The glass fibers may be supplied in the form of rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids. The preferred filaments for plastic reinforcement are made by mechanical pulling.

The glass fiber may be a chopped glass fiber, long glass fiber, glass filament, woven glass fiber, or a combination thereof. In one or more aspects, the glass fiber may further be combined with carbon fiber, woven carbon fiber, ceramic fiber, or a combination thereof. The glass fibers may be continuous or chopped, preferably chopped. Glass fibers in the form of chopped strands may have a length of 0.3 millimeters (mm) to 10 centimeters (cm), preferably 0.5 mm to 5 cm or 3 mm to 13 mm. The glass fibers may have a length from 0.2-20 mm, preferably 0.2-10 mm, more preferably 0.7-7 mm. The glass fibers may have any cross-section, such as a round (or circular), flat, bilobe, or irregular cross-section. The average diameter of the glass fibers may be from 1-25 micrometers (µm), preferably 3-20 µm, more preferably 4-18 µm, even more preferably 5-17 µm. The glass fiber may be a short glass fiber having a diameter of 10 µm or 14 µm. In one or more aspects, the glass fiber has a circular cross-section. Flat glass or bilobe fibers may be used to provide, for example, low warp-high strength-high elongation articles. The glass fiber may have a round (or circular), flat, or irregular cross-section. Thus, use of non-round fiber cross sections is possible. However, in some examples, the glass fiber may have a circular cross-section. The width or diameter of the glass fiber may be from about 1 to about 20 µm, or from about 5 to about 20 µm. In a further example, the width or diameter of the glass fiber may be from about 5 to about 15 µm. In certain compositions, the glass fiber may have a width or diameter of about 14 µm.

The glass fibers may be bonding or non-bonding. As used herein, "non-bonding glass fiber" means the glass fiber is coated with a sizing composition that results in poor adhesion of the coated glass fiber to the polycarbonate matrix. In other words, a non-bonding glass fiber is coated with a sizing composition that is incompatible with the polycarbonate matrix, which is in contrast to a non-bonding glass fiber coated with a sizing composition that has improved adhesion with the polycarbonate matrix (herein referred to as "bonding glass fibers" because they are bonding with respect to the polycarbonate).

The glass-containing reinforcing agent of the polycarbonate composition is present from 5 to 30 wt%, 5 to 25 wt%, 5 to 20 wt%, or 10-20 wt%, based on the total weight of the composition. The glass-containing reinforcing agents may include a combination including glass fiber and milled glass. The glass fiber may be present in an amount from 1 to 25 wt%, 4 to 20 wt%, or 5 to 15 wt%; and the milled glass may be present from 0.1 to 15 wt%, or 1 to 10 wt%, or 1 to 5 wt%, each based on the total weight of the polycarbonate composition.

The polycarbonate composition optionally may include a mineral filler, for example up to 20 wt% of a mineral filler comprising talc, kaolin, calcium carbonate, wollastonite, or a combination thereof, for example, calcium carbonates such as chalk, limestone, marble, synthetic precipitated calcium carbonates, or the like; talc, such as fibrous, modular, needle shaped, lamellar talc, or the like; wollastonite; surface-treated wollastonite; and kaolin, such as hard kaolin, soft kaolin, calcined kaolin, kaolin comprising various coatings known in the art to facilitate compatibility with the polymer matrix. Within this range, a mineral filler may be present up to 10 wt%, or 0.1-10 wt%, up to 5 wt% or 0.1-5 wt%, or up to 2.5 wt%, or 0.1-2.5 wt%, or up to 1 wt%, or 0.1-1.0 wt%, each based on the total weight of the composition. In some aspects, the mineral filler is excluded from the polycarbonate compositions.

Additional mineral fillers or reinforcing agents may also be present. Possible additional fillers or reinforcing agents include, for example, silicates and silica powders such as aluminum silicate (mullite), synthetic calcium silicate, zirconium silicate, fused silica, crystalline silica graphite, natural silica sand, or the like; boron powders such as boron-nitride powder, boron-silicate powders, or the like; oxides such as TiO₂, aluminum oxide, magnesium oxide, or the like; calcium sulfate (as its anhydride, dihydrate or trihydrate); glass spheres such as hollow and solid glass spheres, silicate spheres, cenospheres, aluminosilicate (armospheres), or the like; or the like; single crystal fibers or "whiskers" such as silicon carbide, alumina, boron carbide, iron, nickel, copper, or the like; fibers (including continuous and chopped fibers) such as asbestos, carbon fibers, sulfides such as molybdenum sulfide, zinc sulfide or the like; barium compounds such as barium titanate, barium ferrite, barium sulfate, heavy spar, or the like; metals and metal oxides such as particulate or fibrous aluminum, bronze, zinc, copper and nickel or the like; flaked fillers such as glass flakes, flaked silicon carbide, aluminum diboride, aluminum flakes, steel flakes or the like; fibrous fillers, for example short inorganic fibers such as those derived from blends comprising at least one of aluminum silicates, aluminum oxides, magnesium oxides, and calcium sulfate hemihydrate or the like; natural fillers and reinforcements, such as wood flour obtained by pulverizing wood, fibrous products such as cellulose, cotton, sisal, jute, starch, cork flour, lignin, ground nut shells, corn, rice grain husks or the like; organic fillers such as polytetrafluoroethylene; reinforcing organic fibrous fillers formed from organic polymers capable of forming fibers such as poly(ether ketone), polyimide, polybenzoxazole, poly(phenylene sulfide), polyesters, polyethylene, aromatic polyamides, aromatic polyimides, polyetherimides, polytetrafluoroethylene, acrylic polymers, poly(vinyl alcohol) or the like; as well as additional fillers and reinforcing agents such as mica, clay, feldspar, flue dust, fillite, quartz, quartzite, perlite, tripoli, diatomaceous earth, carbon black, or the like, or a combination thereof.

The fillers and reinforcing agents may be coated with a layer of metallic material to facilitate conductivity, or surface treated with silanes to improve adhesion and dispersion with the polymer matrix. In addition, the reinforcing fillers may be provided in the form of monofilament or multifilament fibers and may be used individually or in combination with other types of fiber, through, for example, co-weaving or core/sheath, side-by-side, orange-type or matrix and fibril constructions, or by other methods known to one skilled in the art of fiber manufacture. Co-woven structures include glass fiber-carbon fiber, carbon fiber-aromatic polyimide (aramid) fiber, and aromatic polyimide fiberglass fiber or the like. Fibrous fillers may be supplied in the form of, for example, rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids.

The polycarbonate compositions optionally may include an organophosphorous flame retardant, for example an organophosphorous flame retardant in amount effective to provide up to 1.5 wt% of phosphorous, based on the total weight of the polycarbonate composition. Within this range, the organophosphorous flame retardant may be present in an amount effective to provide 0.1 to 1.5 wt%, or 0.2 to 1.5 wt%, or 0.3 to 1.5 wt%, or 0.1 to 1.3 wt%, or 0.3 to 1.3 wt% of phosphorous, based on the total weight of the polycarbonate composition. Exemplary aromatic organophosphorous compounds have at least one organic aromatic group that may be a substituted or unsubstituted C₃₋₃₀ group containing one or more of a monocyclic or polycyclic aromatic moiety (which may optionally contain with up to three heteroatoms (N, O, P, S, or Si)) and optionally further containing one or more nonaromatic moieties, for example alkyl, alkenyl, alkynyl, or cycloalkyl. The aromatic moiety of the aromatic group may be directly bonded to the phosphorous-containing group, or bonded via another moiety, for example an alkylene group. In one or more aspects, the aromatic group of the organophosphorous flame retardant is the same as the aromatic group of the homopolycarbonate.

The phosphorous-containing group may be a phosphate (P(=O)(OR)₃), phosphite (P(OR)₃), phosphonate (RP(=O)(OR)₂), phosphinate (R₂P(=O)(OR)), phosphine oxide (R₃P(=O)), or phosphine (R₃P), wherein each R in the foregoing phosphorous-containing groups may be the same or different, provided that at least one R is an aromatic group. A combination of different phosphorous-containing groups may be used. The aromatic group may be directly or indirectly bonded to the phosphorous, or to an oxygen of the phosphorous-containing group (i.e., an ester). In some aspects, the organophosphorous flame retardant includes 9,10-dihydro-9-oxo-10-phosphaphenanthrene-10-oxide (DOPO) and its derivatives.

In one or more aspects, the aromatic organophosphorous compound may be a monomeric phosphate. Representative monomeric aromatic phosphates are of the formula (GO)₃P=O, wherein each G is independently an alkyl, cycloalkyl, aryl, alkylarylene, or arylalkylene group having up to 30 carbon atoms, provided that at least one G is an aromatic group. Two G groups may be joined together to provide a cyclic group. In some aspects ,G corresponds to a monomer used to form the polycarbonate, e.g., resorcinol. Exemplary phosphates include phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, and the like. A specific aromatic phosphate is one in which each G is aromatic, for example, triphenyl phosphate, tricresyl phosphate, isopropylated triphenyl phosphate, and the like.

Di- or polyfunctional aromatic organophosphorous compounds may be used and include, for example, compounds of the formulae 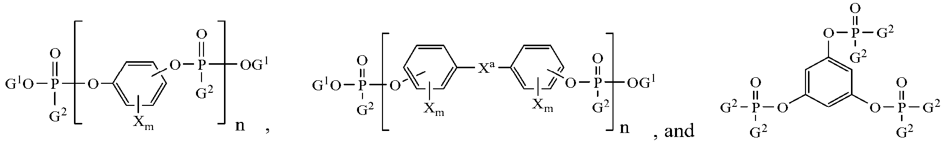 wherein each G¹ is independently a C₁₋₃₀ hydrocarbyl; each G² is independently a C₁₋₃₀ hydrocarbyl or hydrocarbyloxy; X^{a} is as defined in formula (3) or formula (4); each X is independently a bromine or chlorine; m is an integer of 0 to 4, and n is an integer of 1 to 30. In a specific aspect, X^{a} is a single bond, methylene, isopropylidene, or 3,3,5-trimethylcyclohexylidene.

Specific aromatic organophosphorous compounds are inclusive of acid esters of formula (14): 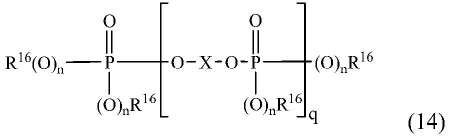
wherein each R¹⁶ is independently C₁₋₈ alkyl, C₅₋₆ cycloalkyl, C₆₋₂₀ aryl, or C₇₋₁₂ arylalkylene, each optionally substituted by C₁₋₁₂ alkyl, specifically by C₁₋₄ alkyl and X is a mono- or poly-nuclear aromatic C₆₋₃₀ moiety or a linear or branched C₂₋₃₀ aliphatic radical, which may be OH-substituted and may contain up to 8 ether bonds, provided that at least one R¹⁶ or X is an aromatic group; each n is independently 0 or 1; and q is from 0.5 to 30. In some aspects each R¹⁶ is independently C₁₋₄ alkyl, naphthyl, phenyl(C₁₋₄)alkylene, aryl groups optionally substituted by C₁₋₄ alkyl; each X is a mono- or poly-nuclear aromatic C₆₋₃₀ moiety, each n is 1; and q is 0.5 to 30. In some aspects, each R¹⁶ is independently aromatic, e.g., phenyl; each X is a mono- or poly-nuclear aromatic C₆₋₃₀ moiety, including a moiety derived from formula (2); n is 1; and q is 0.8 to 15. In other aspects, each R¹⁶ is phenyl; X is cresyl, xylenyl, propylphenyl, butylphenyl, one of the following divalent groups 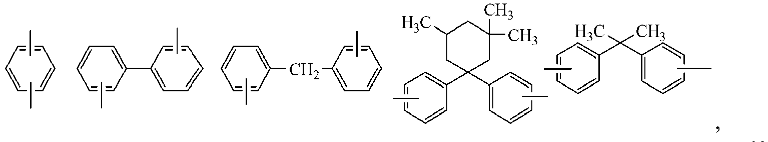
or a combination thereof; n is 1; and q is 1 to 5, or 1 to 2. In some aspects, at least one R¹⁶ or X corresponds to a monomer used to form the polycarbonate, e.g., bisphenol A, resorcinol, or the like. Aromatic organophosphorous compounds of this type include the bis(diphenyl) phosphate of hydroquinone, resorcinol bis(diphenyl phosphate) (RDP), and bisphenol A bis(diphenyl) phosphate (BPADP), and their oligomeric and polymeric counterparts.

The organophosphorous flame retardant may include a phosphorous-nitrogen bond, and may be a phosphazene, phosphonitrilic chloride, phosphorous ester amide, phosphoric acid amide, phosphonic acid amide, phosphinic acid amide, or tris(aziridinyl) phosphine oxide. In one or more aspects, the organophosphorous flame retardant contains a phosphorous-nitrogen bond and is a phosphazene or cyclic phosphazene of the formulae: 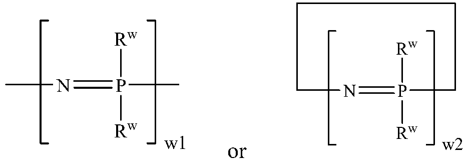 wherein w1 is 3 to 10,000; w2 is 3 to 25, or 3 to 7; and each R^{w} is independently C₁₋₁₂ alkyl, C₂₋₁₂ alkenyl, C₁₋₁₂ alkoxy, C₆₋₁₂ aryl, C₆₋₁₂ aryloxy, or poly(C₁₋₆ alkylene oxide). In the foregoing groups, at least one hydrogen atom may be substituted with a group having an N, S, O, or F atom, or an amino group. For example, each R^{w} may be a substituted or unsubstituted phenoxy, an amino, or a poly(C₁₋₆ alkylene oxide). Optionally, R^{w} may form a crosslink to another phosphazene group. Exemplary crosslinks include bisphenol groups, for example bisphenol A groups. In one or more aspects, the organophosphorous flame retardant is a phosphazene that has a structure represented by the formula:

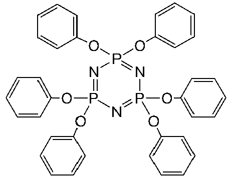

The organophosphorous flame retardant may be present in an amount effective to provide up to 1.5 wt%, or up to 1.2 wt%, or up to 1.0 wt%, or up to 0.8 wt%, or up to 0.6 wt%, or up to 0.4 wt% of phosphorous, based on the total weight of the polycarbonate composition.

The polycarbonate composition optionally may further include one or more flame retardants in addition to the organophosphorous flame retardant. Inorganic flame retardants may be used, for example salts of C₂₋₁₆ alkyl sulfonates such as potassium perfluorobutane sulfonate (Rimar salt), potassium perfluoroctane sulfonate, and tetraethylammonium perfluorohexane sulfonate, salts of aromatic sulfonates such as sodium benzene sulfonate, sodium toluene sulfonate (NATS), or the like, salts of aromatic sulfone sulfonates such as potassium diphenylsulfone sulfonate (KSS), or the like; salts formed by reacting for example an alkali metal or alkaline earth metal (e.g., lithium, sodium, potassium, magnesium, calcium and barium salts) and an inorganic acid complex salt, for example, an oxo-anion (e.g., alkali metal and alkaline-earth metal salts of carbonic acid, such as Na₂CO₃, K₂CO₃, MgCO₃, CaCO₃, or BaCO₃, or a fluoro-anion complex such as Li₃AlF₆, BaSiF₆, KBF₄, K₃AlF₆, KAlF₄, K₂SiF₆, or Na₃AlF₆ or the like. When used, the perfluoroalkyl sulfonate salt may be present in an amount of 0.30 to 1.00 wt%, or 0.40 to 0.80 wt%, or 0.45 to 0.70 wt%, based on the total weight of the composition. When used, the aromatic sulfonate salt may be present in an amount of 0.01 to 0.1 wt%, or 0.02 to 0.06 wt%, or 0.03 to 0.05 wt%.

Halogenated materials optionally may be used as flame retardants in addition to the organophosphorous flame retardant, for example bisphenols of which the following are representative: 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; and 2,2-bis-(3,5-dichloro-4-hydroxyphenyl)-propane 2,2 bis-(3-bromo-4-hydroxyphenyl)-propane. Other halogenated materials include 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, 2,4'-dichlorobiphenyl, and decabromo diphenyl oxide. Metal synergists, e.g., antimony oxide, may also be used with the flame retardant. When present, these halogen-containing flame retardants are present in amounts of 1 to 25 parts by weight, more preferably 2 to 20 parts by weight, based on 100 parts by weight of the total composition, excluding any filler. It is noted that these halogen-containing flame retardants do not include a bromine-containing polycarbonate copolymer.

Anti-drip agents may also be used in the composition, for example a fibril-forming fluoropolymer or a non-fibril forming fluoropolymer such as polytetrafluoroethylene (PTFE). The anti-drip agent may be encapsulated by a rigid copolymer, for example styrene-acrylonitrile copolymer (SAN). PTFE encapsulated in SAN is known as TSAN. An TSAN comprises 50 wt% of PTFE and 50 wt% of SAN, based on the total weight of the encapsulated fluoropolymer. The SAN may comprise, for example, 75 wt% of styrene and 25 wt% of acrylonitrile, based on the total weight of the copolymer. Anti-drip agents may be used in amounts of 0.1 to 10 parts by weight, based on 100 parts by weight of the total composition. In some aspects, the polycarbonate composition includes less than 0.5 wt%, less than 0.2 wt% anti-drip agent. In some aspects, the polycarbonate composition excludes an anti-drip agent.

The polycarbonate composition may include an additive composition. In addition to the polycarbonate, the polycarbonate composition can include various additives ordinarily incorporated into polymer compositions of this type, with the proviso that the additive(s) are selected so as to not significantly adversely affect the desired properties of the thermoplastic composition, in particular smoke density, heat release, critical heat flux at extinguishment, and/or flame spread properties. Such additives can be mixed at a suitable time during the mixing of the components for forming the composition. Additives include impact modifiers, reinforcing agents, antioxidants, heat stabilizers, light stabilizers, ultraviolet (UV) light stabilizers, plasticizers, lubricants, mold release agents, antistatic agents, colorants such as such as titanium dioxide, carbon black, and organic dyes, surface effect additives, and radiation stabilizers. A combination of additives can be used, for example a combination of a heat stabilizer, mold release agent, and ultraviolet light stabilizer. In general, the additives are used in the amounts generally known to be effective. For example, the total amount of the can be up to 10 wt%, or 0.01 to 5 wt.%, based on the total weight of the polycarbonate composition.

In one or more aspects, the polycarbonate composition may include 10 to 70 wt% of a bromine-containing polycarbonate copolymer present in an amount effective to provide 5 to 10 wt% bromine content; 5 to 60 wt% of a poly(carbonate-siloxane) composition comprising a poly(carbonate siloxane) comprising less than 10 wt% siloxane, present in an amount effective to provide 0.5 to 10 wt%, or 2 to 6 wt% of total siloxane, based on the total weight of the polycarbonate composition; 5 to 30 wt% of a glass-containing reinforcing agent; optionally, 0.1 to 40 wt% of a homopolycarbonate; optionally, up to 20 wt% of a mineral filler, preferably wherein the mineral filler comprises talc, kaolin, calcium silicate, calcinated kaolin, calcium carbonate, wollastonite, or a combination thereof; optionally, an organophosphorous flame retardant in amount effective to provide up to 1.5 wt% of phosphorous, based on the total weight of the polycarbonate composition; and optionally, up to 10 wt% of an additive composition, wherein the amount of bromine-containing polycarbonate copolymer, poly(carbonate-siloxane), glass-containing reinforcing agent, optional homopolycarbonate, optional mineral filler, optional organophosphorous flame retardant, and optional additive composition total 100 wt%.

In one or more aspects, the polycarbonate composition may include 10 to 70 wt% of a bromine-containing polycarbonate copolymer present in an amount effective to provide 5 to 10 wt% bromine content; 5 to 60 wt% of a poly(carbonate-siloxane) composition comprising a combination of a poly(carbonate siloxane) comprising less than 10 wt% siloxane and poly(carbonate siloxane) comprising 10 to 30 wt% siloxane, wherein the poly(carbonate-siloxane) composition is present in an amount effective to provide 0.5 to 10 wt%, or 2 to 6 wt% of total siloxane, based on the total weight of the polycarbonate composition; 5 to 30 wt% of a glass-containing reinforcing agent; optionally, 0.1 to 40 wt% of a homopolycarbonate; optionally, up to 20 wt% of a mineral filler, preferably wherein the mineral filler comprises talc, kaolin, calcium silicate, calcinated kaolin, calcium carbonate, wollastonite, or a combination thereof; optionally, an organophosphorous flame retardant in amount effective to provide up to 1.5 wt% of phosphorous, based on the total weight of the polycarbonate composition; and optionally, up to 10 wt% of an additive composition, wherein the amount of bromine-containing polycarbonate copolymer, poly(carbonate-siloxane), glass-containing reinforcing agent, optional homopolycarbonate, optional mineral filler, optional organophosphorous flame retardant, and optional additive composition total 100 wt%.

In one or more aspects, the polycarbonate composition may include 10 to 70 wt% of a bromine-containing polycarbonate copolymer present in an amount effective to provide 10 to 20 wt%, or 15 to 20 wt% bromine content; 5 to 20 wt% of a poly(carbonate-siloxane) composition comprising a poly(carbonate siloxane) comprising 30 to 70 wt% siloxane, wherein the poly(carbonate-siloxane) composition is present in an amount effective to provide 0.5 to 10 wt%, or 2 to 6 wt% of total siloxane, based on the total weight of the polycarbonate composition; 5 to 30 wt% of a glass-containing reinforcing agent; optionally, 0.1 to 40 wt% of a homopolycarbonate; optionally, up to 20 wt% of a mineral filler, preferably wherein the mineral filler comprises talc, kaolin, calcium silicate, calcinated kaolin, calcium carbonate, wollastonite, or a combination thereof; optionally, an organophosphorous flame retardant in amount effective to provide up to 1.5 wt% of phosphorous, based on the total weight of the polycarbonate composition; and optionally, up to 10 wt% of an additive composition, wherein the amount of bromine-containing polycarbonate copolymer, poly(carbonate-siloxane), glass-containing reinforcing agent, optional homopolycarbonate, optional mineral filler, optional organophosphorous flame retardant, and optional additive composition total 100 wt%.

In one or more aspects, the polycarbonate composition may include 10 to 70 wt% of a bromine-containing polycarbonate copolymer present in an amount effective to provide 10 to 20 wt%, or 15 to 20 wt% bromine content; 5 to 60 wt% of a poly(carbonate-siloxane) composition comprising a combination of a poly(carbonate siloxane) comprising 30 to 70 wt% siloxane and a poly(carbonate siloxane) comprising less than 10 wt% siloxane, wherein the poly(carbonate-siloxane) composition is present in an amount effective to provide 0.5 to 10 wt%, or 2 to 6 wt% of total siloxane, based on the total weight of the polycarbonate composition; 5 to 30 wt% of a glass-containing reinforcing agent; optionally, 0.1 to 40 wt% of a homopolycarbonate; optionally, up to 20 wt% of a mineral filler, preferably wherein the mineral filler comprises talc, kaolin, calcium silicate, calcinated kaolin, calcium carbonate, wollastonite, or a combination thereof; optionally, an organophosphorous flame retardant in amount effective to provide up to 1.5 wt% of phosphorous, based on the total weight of the polycarbonate composition; and optionally, up to 10 wt% of an additive composition, wherein the amount of bromine-containing polycarbonate copolymer, poly(carbonate-siloxane), glass-containing reinforcing agent, optional homopolycarbonate, optional mineral filler, optional organophosphorous flame retardant, and optional additive composition total 100 wt%.

The polycarbonate compositions may be manufactured by various methods. For example, powdered polycarbonate, and optional components are first blended, optionally with fillers in a HENSCHEL high speed mixer. Other low shear processes, including but not limited to hand mixing, may also accomplish this blending. The blend is then fed into the throat of a twin-screw extruder via a hopper. Alternatively, at least one of the components may be incorporated into the composition by feeding directly into the extruder at the throat or downstream through a side-stuffer. Additives may also be compounded into a masterbatch with a desired polymeric polymer and fed into the extruder. The extruder is generally operated at a temperature higher than that necessary to cause the composition to flow. The extrudate is immediately quenched in a water bath and pelletized. The pellets so prepared may be one-fourth inch long or less as desired. Such pellets may be used for subsequent molding, shaping, or forming.

Shaped, formed, or molded articles comprising the polycarbonate compositions are also provided. The polycarbonate compositions may be molded into useful shaped articles by a variety of methods, such as molding, casting, or extruding the polycarbonate composition. Molding can include injection molding, extrusion, rotational molding, blow molding, and thermoforming. In one or more aspects, the article is an extruded article, a molded article, pultruded article, a thermoformed article, a foamed article, a layer of a multi-layer article, a substrate for a coated article, or a substrate for a metallized article.

Transportation components, in particular interior train components that are molded or extruded from the polycarbonate compositions are also provided. Molding may be by a variety of means such as injection molding, rotational molding, blow molding, or the like. In one or more aspects, the molding is by injection molding. Illustrative claddings include, for example interior vertical surfaces, such as side walls, front walls, end-walls, partitions, room dividers, flaps, boxes, hoods and louvres; interior doors and linings for internal and external doors; window insulations, kitchen interior surfaces, interior horizontal surfaces, such as ceiling paneling, flaps, boxes, hoods and louvres; luggage storage areas, such as overhead and vertical luggage racks, luggage containers and compartments; driver's desk applications, such as paneling and surfaces of driver's desk; interior surfaces of gangways, such as interior sides of gangway membranes (bellows) and interior linings; window frames (including sealants and gaskets); (folding) tables with downward facing surface; interior and exterior surface of air ducts, and devices for passenger information (such as information display screens) and the like.

In some aspects, the article may be an interior railway component, including, for example, a seat component, an extruded interior cladding, a molded interior cladding, a side wall, a front wall, an end wall, a partition, a room divider, a flap, a box, a hood, a louvre, a ceiling panel, a table tray, a head rest, a privacy divider, a center console, an arm rest, a leg rest, a food tray, an end bay, a shroud, a kick panel, a foot well, literature pocket, a monitor, a bezel, a line replaceable unit, a foot bar, a luggage rack, a luggage container, a luggage compartment, a floor composite, a wall composite, an air duct, a strip, a device for passenger information, a window frame, an interior lining, an interior vertical surface, an interior door, a lining for an internal door, a lining for an external door, an interior horizontal surface, an electrical component, or a lighting component.

The smoke density and maximum heat release rate values for hazard levels HL1 to HL3 in the European Railway standard EN-45545 (2013) are shown in Table 1 for R1 and R6 applications combined.

**Table 1**

| Hazard Level | Smoke Density, DS-4 | | Heat release, MAHRE (kW/m²) | | Critical flux at extinguishment (kW/m²) | |
|---|---|---|---|---|---|---|
| HL1 | | ≤ 600 | | - | | > 20 |
| HL2 | | ≤ 300 | | ≤ 90 | | > 20 |
| HL3 | | ≤ 150 | | ≤ 60 | | > 20 |

Data in the Examples below shows that the compositions herein may meet the requirements for HL2, for both R1 and R6 applications.

While the compositions described herein are designed for use preferably in railway interiors, it is to be understood that the compositions are also useful in other interior components that are required to meet the test standards for HL2 for both R1 and R6 applications. Interior bus components are preferably mentioned. Current discussions directed to increasing bus safety include proposals to apply the HL2 standards to interior bus components. One or more aspects accordingly provide interior bus components, including seat components and claddings as described above and comprising the polycarbonate compositions described herein.

This disclosure is further illustrated by the following examples, which are non-limiting.

### EXAMPLES

The following components shown in Table 2 were used in the examples.

**Table 2**

| Component | Description | Source |
|---|---|---|
| PC-Si-1 | Poly(bisphenol A carbonate-dimethylsiloxane) copolymer produced by interfacial polymerization and end-capped with p-cumylphenol (PCP); having a siloxane content of 6 weight percent (wt%), an average siloxane block length of 45 units (D45), and a weight average molecular weight (M_{w}) of 22.5 to 23.5 kilograms per mole (kg/mol) (as determined by GPC using polystyrene standards and calculated for polycarbonate) | SABIC/SHPP |
| PC-Si-2 | Poly(bisphenol A carbonate-dimethylsiloxane) copolymer produced via interfacial polymerization and end-capped with p-cumylphenol (PCP), 20 wt% siloxane, average siloxane block length = 45 units (D45), Mw = 29,000-31,000 g/mol (as determined by GPC using polystyrene standards and calculated for polycarbonate) | SABIC/SHPP |
| Br-PC | Poly(tetrabromobisphenol A carbonate-bisphenol A) copolymer produced by interfacial polymerization and end-capped with tribromophenol; having a bromine content of 26 wt%, a Mw of 22.5 to 24.5 kg/mol (as determined by GPC using polystyrene standards and calculated for polycarbonate) | SABIC/SHPP |
| PC-1 | Linear poly(bisphenol A carbonate), Mw = 30,000-31,000 g/mol per GPC using bisphenol A homopolycarbonate standards | SABIC/SHPP |
| PC-2 | Linear poly(bisphenol A carbonate), Mw = 34,000-36,000 g/mol per GPC using bisphenol A homopolycarbonate standards | SABIC/SHPP |
| PC-3 | Poly(bisphenol A/resorcinol carbonate-resorcinol phthalate-dimethyl siloxane) having 8-12 mol% bisphenol A carbonate linkages, 8-12 mol% resorcinol carbonate linkages, 78-82 mol% resorcinol phthalate ester linkages with an isophthalate:terephthalate ratio of 1:1, and 0.8-1.2 wt% of a eugenol-linked D10 dimethylsiloxane; para-cumyl phenol endcapped; Tg = 142°C, Mw = 22,500-26,500 g/mol as per GPC using bisphenol A homopolycarbonate standards | SABIC/SHPP |
| NB-GF | Non-bonding glass fiber, 4 mm chopped strands (available as CRATEC) | OWENS CORNING |
| GF-1 | 731EC milled glass | OWENS CORNING |
| P-FR | Oligomeric phosphate ester having 10.7 wt% of phosphorous (available as FYROLFLEX SOL-DP) | ICL INDUSTRIAL |
| MZP | Mono Zinc Phophate, Phosphoric acid, zinc salt (2:1) | Budenheim |
| STAB | TBPP, Tris(2,4-di-tert-butylphenyl) phosphite, CAS Reg. No. 31570-04-4; obtained as IRGAFOS^{™} 168 from BASF Corp. | BASF |
| UV | 2, 2'-methylene-bis (6-(2H-benzotriazol-2-yl)-4-(1, 1, 3, 3-tetramethylbutyl), Tinuvin 360 | BASF |

The testing samples were prepared as described below and the following test methods were used.

Typical compounding procedures are described as follows: All raw materials were compounded on a 25 millimeter (mm) co-rotating twin-screw extruder with a vacuum vented standard mixing screw (Werner Pfleiderer ZSK) operated at a screw speed of 300 revolutions per minute (rpm). The glass fiber (GF) was added using a side-feeder that was positioned down-stream. The strands were cooled through a water bath prior to being formed into pellets (pelletizing). The pellets were subsequently dried for 3 to 4 hours at 90°C to 110°C in a forced air-circulating oven prior to injection molding. A molding machine (Engel 45, 75, or 90 tons) was used to mold test parts for testing.

The compounding conditions are provided in Table 3.

**Table 3**

| Parameter | Unit | E1, CE1 | E2-E7 |
|---|---|---|---|
| Die | - | 2 holes | 2 holes |
| Feed temperature | °C | 40 | 40 |
| Zone 1 temp. | °C | 180-220 | 180-220 |
| Zone 2-8 temp. | °C | 250-310 | 250-310 |
| Die temperature | °C | 250-310 | 280-320 |
| Screw speed | rpm | 300 | 300 |
| Throughput | kg/h | 15-25 | 15-25 |
| Vacuum 1 | kPa | ~70 | ~70 |

The molding conditions are provided in Table 4.

**Table 4**

| Parameter | Unit | E1, CE1 | E2-E7 |
|---|---|---|---|
| Pre-drying time | h | 3-4 | 3-6 |
| Pre-drying temp. | °C | 90-110 | 90-105 |
| Hopper temp. | °C | 40 | 40 |
| Zone 1 temp. | °C | 260-290 | 260-300 |
| Zone 2 temp. | °C | 270-300 | 270-310 |
| Zone 3 temp. | °C | 280-310 | 280-320 |
| Nozzle temp. | °C | 275-305 | 275-315 |
| Mold temperature | °C | 75-100 | 75-100 |
| Screw speed | rpm | 25 | 25 |
| Back pressure | kPa | 500 | 5 |
| Injection time | s | 1.5-4 | 1.9 |
| Approx. cycle time | s | 45-120 | 45 |

The sheet extrusion conditions are provided in Table 5.

**Table 5**

| Parameter | Unit | Range (E1, CE1) | | Range (E2-E7) | |
|---|---|---|---|---|---|
| | | Minimum | Maximum | Minimum | Maximum |
| Melt Temperature | °C | 230 | 280 | 230 | 280 |
| Front - Zone 3 Temp | °C | 230 | 280 | 230 | 280 |
| Middle - Zone 2 Temp | °C | 220 | 270 | 220 | 270 |
| Rear - Zone 1 Temp | °C | 210 | 260 | 210 | 260 |
| Calibrator Temperature | °C | 50 | 100 | 50 | 100 |
| Drying Temperature | °C | 90 | 110 | 90 | 105 |
| Drying Time | hr | 3 | 4 | 3 | 6 |
| Maximum Moisture Content | % | | 0.05 | | 0.05 |

Sample testing methods are shown in Table 6.

**Table 6**

| Property | Unit | Standard | Conditions | Specimen Type |
|---|---|---|---|---|
| Izod Notched impact (INI) | Kilojoule per square meter (kJ/m²) | ISO 180/1A | 23°C | 80 x 10 x 4 mm and 80 x 10 x 3 mm |
| Tensile modulus | Megapascal (MPa) | ISO 527 | 23°C, Type I, 5 mm/min | Bar; 5 x 13 x 4 mm |
| Vicat softening temperature (Vicat B120) | °C | ISO 306 | Heating rate of 120°C/hour and a force of 50 Newtons (method B120) | Bar; 10 x 10 x 4 mm |
| Melt volume rate (MVR) | cc/10 min | ASTM D1238-04 | 300°C, 1.2 kg weight, over 10 min | |
| Density | - | ISO 1183 | 23°C | - |
| Smoke density (DS-4) | - | ISO 5659-2 | Irradiance of 50 kW/m²; measurement after 240 seconds | Plaque; 75 x 75 x 3 mm |
| Smoke Density (VOF₄) | - | ISO 5659-2 | Irradiance of 50 kW/m²; measurement after 240 seconds | Plaque; 75 x 75 x 3 mm |
| Heat Release (MAHRE) | - | ISO 5660-1 | Irradiance of 50 kW/m² | Plaque; 100 x 100 x 3 mm |
| Critical flux at extinguishment at 2 mm (CFE-1) | Kilowatt per square meter (kW/m²) | ISO 5658-2 | Not conditioned; pilot flame = propane | Part, 800 × 155 x 2 mm; extruded sheet |
| Critical flux at extinguishment at 3 mm (CFE-2) | kW/m² | ISO 5658-2 | Not conditioned; pilot flame = propane | Part, 800 x 155 x 3 mm; injection molded |

Samples were prepared and tested having the compositions described in Table 7.

**Table 7**

| Comp. | | 1 | 2 | 3 | 4 | 5 | 6 | 7* | 8* | 9* | 10 |
|---|---|---|---|---|---|---|---|---|---|---|---|
| PC-Si-1 | wt% | 33.0 | 33.0 | 33.0 | 33.0 | 40.0 | 40.0 | | 33.0 | 40.0 | |
| PC-Si-2 | wt% | | | | | | | 15.0 | | | |
| PC-1 | wt% | | | | | 14.62 | 14.17 | 58.66 | | | |
| PC-2 | wt% | 20.62 | 16.62 | 15.62 | 21.62 | | | | 14.85 | | |
| PC-3 | wt% | | | | | | | | | 34.62 | 74.62 |
| Br-PC | wt% | 30 | 30 | 30 | 20 | 30 | 30 | | 30 | | |
| P-FR | wt% | | | 5 | 5 | | | 5 | | 5 | 5 |
| Talc | | | | | | | | 20 | 16.0 | | |
| MZP | wt% | | | | | | | 0.96 | 0.77 | | |
| STAB | wt% | 0.08 | 0.08 | 0.08 | 0.08 | 0.08 | 0.08 | 0.08 | 0.08 | 0.08 | 0.08 |
| UV | wt% | 0.30 | 0.30 | 0.30 | 0.30 | 0.30 | 0.30 | 0.30 | 0.30 | 0.30 | 0.30 |
| NB-GF | wt% | 11 | 15 | 11 | 15 | 15 | 15 | | 11 | 15 | 15 |
| GF-1 | wt% | 5 | 5 | 5 | 5 | | | | 5 | 5 | 5 |
| Total | wt% | 100 | 100 | 100 | 100 | 100 | 100 | 100 | 100 | 100 | 100 |
| Properties | | | | | | | | | | | |

| Flame spread | | | | | | | | | | | |
|---|---|---|---|---|---|---|---|---|---|---|---|
| CFE (3 mm) | kW/m² | 24.3 | 23.5 | 26.4 | 26.0 | 24.2 | 24.8 | 10.1 | 19.9 | 12.3 | 25.0 |

| Smoke Density | | | | | | | | | | | |
|---|---|---|---|---|---|---|---|---|---|---|---|
| DS4, 3 mm | | 182 | 180 | 184 | 146 | 192 | 176 | 275 | 715 | 174 | 80 |
| VOF₄, 3 mm | | 402 | 389 | 441 | 323 | 357 | 346 | 412 | 1303 | 418 | 136 |

| Heat Release | | | | | | | | | | | |
|---|---|---|---|---|---|---|---|---|---|---|---|
| MAHRE | kW/m² | 52 | 51 | 45 | 32 | 67 | 80 | 147 | 112 | 79 | 32 |
| Tensile stress at yield, 5mm/min | MPa | 53 | 54 | 59 | 57 | 57 | 58 | 57 | 65 | 54 | 60 |
| Tensile strain at break, 5 mm/min | MPa | 8.5 | 5.9 | 4.9 | 4.6 | 6.0 | 5.4 | 4.2 | 4.2 | 6.4 | 8.7 |
| Tensile modulus | MPa | 4420 | 5090 | 4860 | 5500 | 4890 | 4910 | 4820 | 4660 | 5320 | 5600 |
| Flexural stress at break, 2 mm/min | MPa | 91 | 94 | 139 | 70 | 97 | 100 | 84 | 93 | 93 | 102 |
| Flexural modulus, 2 mm/min | MPa | 4240 | 5020 | 4700 | 5440 | 4670 | 4620 | 4870 | 4680 | 5230 | 5750 |
| INI, 23 °C, 4 mm | kJ/m² | 7.5 | 11.7 | 8.4 | 11.1 | 15.5 | 12.6 | 11.7 | 4.4 | 12.5 | 7.3 |
| HDT, 1.82 MPa | °C | 140 | 140 | 122 | 117 | 142 | 143 | 111 | 112 | 105 | 106 |
| MVR, 260 °C, 5 kg, 300 s | cm³/10 min | 7.4 | 2.9 | 7.9 | 8.7 | 3.7 | 4.0 | 18.1 | 26.7 | 11.6 | 6.1 |
| MVR, 260 °C, 5 kg, 900 s | cm³/10 min | 11.8 | 3.0 | 8.3 | 9.0 | 3.8 | 3.9 | 27.4 | 37.9 | 12.4 | 6.3 |

A s shown Table 7, Examples 1-6, that include a bromine-containing polycarbonate copolymer and a poly(carbonate siloxane) present in an amount effective to provide from 1.98-8.8 wt% siloxane content, based on the total composition. Comparative Example 7 shows that when the brominated polycarbonate is omitted and an organophosphorus flame retardant is present in a talc-filled composition, the desired combination of properties was not achieved. Similarly, Comparative Example 8 shows that the replacement of the organophosphorus flame retardant with the brominated polycarbonate in a talc-filled composition failed to provide the desired combination of properties.

Comparative Example 9 shows that a combination of poly(ester carbonate siloxane) ("PC-3") with a polycarbonate siloxane copolymer failed to provide the desired combination of properties. However, as shown in Example 10, a composition including PC-3, wherein the siloxane content of the compositions is 0.6-0.9 wt% provides the desired combination of properties.

This disclosure further encompasses the following aspects.

Aspect 1. A polycarbonate composition, comprising 10 to 70 wt% of a bromine-containing polycarbonate copolymer; 5 to 60 wt% of a poly(carbonate-siloxane), present in an amount effective to provide 0.5 to 10 wt% of total siloxane, based on the total weight of the polycarbonate composition; 5 to 30 wt% of a glass-containing reinforcing agent; optionally, 0.1 to 40 wt% of a homopolycarbonate ;optionally, up to 20 wt% of a mineral filler, preferably wherein the mineral filler comprises talc, kaolin, calcium silicate, calcinated kaolin, calcium carbonate, wollastonite, or a combination thereof; optionally, an organophosphorous flame retardant in amount effective to provide up to 1.5 wt% of phosphorous, based on the total weight of the polycarbonate composition; and optionally, up to 10 wt% of an additive composition, wherein the amount of homopolycarbonate, poly(phthalate-carbonate, bromine-containing polycarbonate copolymer, poly(carbonate-siloxane), glass-containing reinforcing agent, optional mineral filler, optional organophosphorous flame retardant, and optional additive composition total 100 wt%, wherein a molded or extruded sample of the composition has: a smoke density after 4 minutes (DS-4) of 300 or less, measured in accordance with ISO 5659-2 on a 3 mm thick plaque at 50 kW/m²; an integral of smoke density as a function of time after 4 minutes (VOF4) of 600 or less, measured in accordance with ISO 5659-2 on a 3 mm thick plaque at 50 kW/m²; a maximum average heat release (MAHRE) of 90 kW/m² or less, measured in accordance with ISO 5660-1 on a 3 mm thick plaque at 50 kW/m²; a critical heat flux at extinguishment (CFE) of 20 kW/m² or greater, measured in accordance with ISO 5658-2 on a 3 mm thick plaque; or a combination thereof.

Aspect 1a. The polycarbonate composition of aspect 1 comprising 5 to 25 wt% or 5 to 15 wt% of the glass-containing reinforcing agent.

Aspect 1b. The polycarbonate composition of any one of the preceding aspects, wherein the poly(carbonate-siloxane) is present in an amount effective to provide 1 to 10 wt%, 2 to 10 wt%, 3 to 10 wt%, 3.5 to 10 wt%, 4 to 10 wt%, 2 to 8 wt%, 3 to 8 wt%, 3.5 to 8 wt%, or 4 to 8 wt% total siloxane content based on the total weight of the polycarbonate composition.

Aspect 1c. The polycarbonate composition of any one of the preceding aspects, wherein the bromine-containing polycarbonate copolymer is present in amount effective to provide 1 to 20 wt%, 1 to 15 wt%, 1 to 10 wt%, 1.5 to 10 wt%, 2 to 9 wt%, of 2 to 8.5 wt%, or 2 to 8 wt%, or 1 to 5 wt% total bromine content, each based on the total weight of the polycarbonate composition.

Aspect 1d. The polycarbonate composition of any one of the preceding aspects, wherein the bromine-containing polycarbonate copolymer has a bromine content of 10 to 50 wt%, 15 to 40 wt%, 20 to 30 wt%, or 24 to 27.5 wt% each based on the weight of the bromine-containing polycarbonate copolymer.

Aspect 1e. The polycarbonate composition of any one of the preceding aspects, wherein the organophosphorous flame retardant is present in an amount effective to provide 0.1 to 1.5 wt%, or 0.2 to 1.5 wt%, or 0.3 to 1.5 wt%, or 0.1 to 1.3 wt%, or 0.3 to 1.3 wt% phosphorous, based on the total weight of the polycarbonate composition.

Aspect 2. A polycarbonate composition comprising a poly(ester-carbonate-siloxane), wherein the poly(ester-carbonate-siloxane) comprises bisphenol carbonate units, isophthalate-terephthalate-bisphenol ester units, and siloxane units; an organophosphorous flame retardant in amount effective to provide up to 1.5 wt% of phosphorous, based on the total weight of the polycarbonate composition; 5 to 30 wt% of a glass-containing reinforcing agent; optionally, a poly(carbonate-siloxane), present in an amount effective to provide less than 2.4 wt% of total siloxane, based on the total weight of the polycarbonate composition; optionally, 0.1 to 40 wt% of a homopolycarbonate; optionally, up to 20 wt% of a mineral filler, preferably wherein the mineral filler comprises talc, kaolin, calcium silicate, calcinated kaolin, calcium carbonate, wollastonite, or a combination thereof; optionally, up to 10 wt% of an additive composition, wherein the amount of polycarbonate-ester-siloxanes, poly(carbonate-siloxane), glass-containing reinforcing agent, optional homopolycarbonate, optional mineral filler, organophosphorous flame retardant, and optional additive composition total 100 wt%, wherein a molded or extruded sample of the composition has: a smoke density after 4 minutes (DS-4) of 300 or less, measured in accordance with ISO 5659-2 on a 3 mm thick plaque at 50 kW/m²; an integral of smoke density as a function of time after 4 minutes (VOF4) of 600 or less, measured in accordance with ISO 5659-2 on a 3 mm thick plaque at 50 kW/m²; a maximum average heat release (MAHRE) of 90 kW/m² or less, measured in accordance with ISO 5660-1 on a 3 mm thick plaque at 50 kW/m²; a critical heat flux at extinguishment (CFE) of 20 kW/m² or greater, measured in accordance with ISO 5658-2 on a 3 mm thick plaque; or a combination thereof.

Aspect 2a. The polycarbonate composition of Aspect 2, wherein the poly(ester-carbonate-siloxane) comprises bisphenol A carbonate units, isophthalate-terephthalate-bisphenol ester units, and siloxane units, wherein the siloxane units are blocks containing 5 to 200 dimethylsiloxane units.

Aspect 2b. The polycarbonate composition of Aspect 2 or 2a, wherein the poly(ester-carbonate-siloxane) is present in an amount effective to provide up to 1.2 wt%, or 1.0 wt%, or 0.8 wt% of siloxane content, based on the total composition.

Aspect 2c. The polycarbonate composition of Aspect 2 or 2a, wherein the polycarbonate composition comprises a siloxane content of less than 2.4 wt%, based on the total composition.

Aspect 2d. The polycarbonate composition of Aspect 2 or 2a, wherein the polycarbonate composition comprises a siloxane content of less than or equal to 1 wt%, each based on the total composition.

Aspect 3. The polycarbonate composition of any one of the preceding aspects, wherein a molded or extruded sample of the composition has: a smoke density after 4 minutes (DS-4) of 300 or less, measured in accordance with ISO 5659-2 on a 3 mm thick plaque at 50 kW/m²; an integral of smoke density as a function of time after 4 minutes (VOF4) of 600 or less, measured in accordance with ISO 5659-2 on a 3 mm thick plaque at 50 kW/m²; a maximum average heat release (MAHRE) of 90 kW/m² or less, measured in accordance with ISO 5660-1 on a 3 mm thick plaque at 50 kW/m²; and a critical heat flux at extinguishment (CFE) of 20 kW/m² or greater, measured in accordance with ISO 5658-2 on a 3 mm thick plaque; or a combination thereof.

Aspect 4. The polycarbonate composition of any one of the preceding aspects, wherein the poly(carbonate-siloxane) comprises a poly(carbonate-siloxane) copolymer comprising less than 10 wt% of siloxane content, a poly(carbonate-siloxane) copolymer comprising 10 to less than 30 wt% of siloxane content, a poly(carbonate-siloxane) copolymer comprising 30 to 70 wt% of siloxane content, or a combination thereof, wherein each amount is based on total weight of each poly(carbonate-siloxane) copolymer.

Aspect 4a. The polycarbonate composition of any one of the preceding aspects, wherein the poly(carbonate-siloxane) comprises a poly(carbonate-siloxane) copolymer comprising less than 10 wt% of siloxane content, based on total weight of each poly(carbonate-siloxane) copolymer.

Aspect 4b. The polycarbonate composition of any one of the preceding aspects, wherein the poly(carbonate-siloxane) composition comprises a poly(carbonate-siloxane) copolymer comprising less than 10 wt% of siloxane content and a poly(carbonate-siloxane) copolymer comprising 10 to less than wt% of siloxane content , based on total weight of each poly(carbonate-siloxane) copolymer.

Aspect 4c. The polycarbonate composition of any one of the preceding aspects, wherein the poly(carbonate-siloxane) comprises a poly(carbonate-siloxane) copolymer comprising 10 to less than 30 wt% of siloxane content, based on total weight of each poly(carbonate-siloxane) copolymer.

Aspect 4d. The polycarbonate composition of any one of the preceding aspects, wherein the poly(carbonate-siloxane) comprises a poly(carbonate-siloxane) copolymer comprising 30 to 70 wt% of siloxane content, or a combination thereof, wherein each amount is based on total weight of each poly(carbonate-siloxane) copolymer.

Aspect 4e. The polycarbonate composition of any one of the preceding aspects, wherein the poly(carbonate-siloxane) composition comprises a poly(carbonate-siloxane) copolymer comprising 30 to 70 wt% of siloxane content and a poly(carbonate-siloxane) copolymer comprising less than 10 wt% siloxane content, wherein each amount is based on total weight of each poly(carbonate-siloxane) copolymer.

Aspect 5. The polycarbonate composition of any one of the preceding aspects, wherein the glass-containing reinforcing agent is glass fiber, milled glass, glass bead, glass flake, or a combination thereof, preferably wherein the glass-containing reinforcing agent is glass fiber, milled glass, or a combination thereof.

Aspect 6a. The polycarbonate composition of any one of the preceding aspects, wherein the glass-containing reinforcing agent comprises: 4 to 20 wt% of glass fiber; and 1 to 10 wt% of milled glass, wherein each amount is based on the total weight of the polycarbonate composition.

Aspect 6b. The polycarbonate composition of any one of the preceding aspects, wherein the glass-containing reinforcing agent comprises: 4 to 20 wt% of glass fiber, preferably 4 to 15 wt%; and 1 to 10 wt% of milled glass, wherein each amount is based on the total weight of the polycarbonate composition.

Aspect 6c. The polycarbonate composition of any one of the preceding aspects, wherein the glass-containing reinforcing agent comprises: 4 to 20 wt% of glass fiber, preferably 4 to 15 wt%; and 1 to 10 wt%, preferably 1 to 5 wt% of the mineral filler, preferably talc.

Aspect 7. The polycarbonate composition of any one of the preceding aspects, wherein the organophosphorous flame retardant comprises a C₃₋₃₀ aromatic group and a phosphate group, phosphite group, phosphonate group, phosphinate group, phosphine oxide group, phosphine group, phosphazene, or a combination comprising at least one of the foregoing phosphorus-containing groups.

Aspect 8. The polycarbonate composition of any one of the preceding aspects, wherein the organophosphorous flame retardant comprises a monomeric or oligomeric phosphate (P(=O)(OR)₃), phosphite (P(OR)₃), phosphonate (RP(=O)(OR)₂), phosphinate (R₂P(=O)(OR)), phosphine oxide (R₃P(=O)), or phosphine (R₃P), wherein each R in the may be the same or different, provided that at least one R is an aromatic group; a monomeric or oligomeric compound having at least one phosphorous-nitrogen bond; or a combination thereof.

Aspect 9a. The polycarbonate composition of any one of the preceding aspects, wherein the organophosphorous flame retardant comprises: 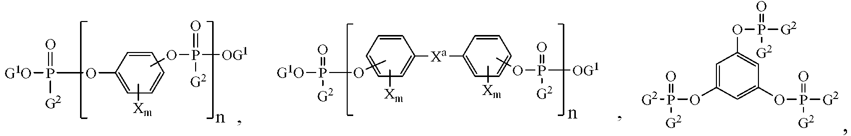 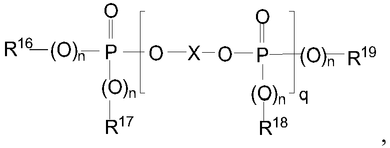 or a combination thereof, wherein each occurrence of G¹ is independently a C₁₋₃₀ hydrocarbyl; each occurrence of G² is independently a C₁₋₃₀ hydrocarbyl or hydrocarbyloxy; each X is independently a bromine or chlorine; R¹⁶, R¹⁷, R¹⁸, and R¹⁹ are each independently C₁₋₈ alkyl, C₅₋₆ cycloalkyl, C₆₋₂₀ aryl, or C₇₋₁₂ arylalkylene, each optionally substituted by C₁₋₁₂ alkyl, preferably by C₁₋₄ alkyl; X is a mono- or poly-nuclear aromatic C₆₋₃₀ moiety or a linear or branched C₂₋₃₀ aliphatic radical, each optionally OH-substituted and optionally comprising up to 8 ether bonds; at least one of R¹⁶, R¹⁷, R¹⁸, R¹⁹, and X is an aromatic group; m is 0 to 4; and n is 1 to 30.

Aspect 9b. The polycarbonate composition of any one of the preceding aspects, wherein the organophosphorous flame retardant is a phosphazene of 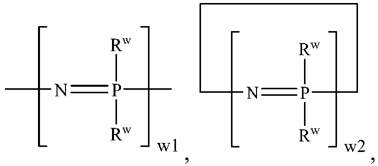 or a combination thereof, wherein w1 is 3 to 10,000, w2 is 3 to 25, and each R^{w} is independently a C₁₋₁₂ alkyl, C₂₋₁₂ alkenyl, C₁₋₁₂ alkoxy, C₆₋₁₂ aryl, C₆₋₁₂ aryloxy, or polyoxy(C₁₋₆ alkylene) group.

Aspect 10. The polycarbonate composition of any one of the preceding aspects, wherein the mineral filler comprises mica, clay, feldspar, quartz, quartzite, perlite, tripoli, diatomaceous earth, aluminum silicate, synthetic calcium silicate, fused silica, fumed silica, sand, boron-nitride powder, boron-silicate powder, calcium sulfate, calcium carbonates, talc, wollastonite, or a combination thereof.

Aspect 11. The polycarbonate composition of any one of the preceding aspects, wherein the additive composition comprises an antioxidant, a heat stabilizer, a light stabilizer, an ultraviolet light stabilizer, a plasticizer, a lubricant, a mold release agent, an antistatic agent, a colorant, a surface effect additive, a radiation stabilizer, an anti-drip agent, or a combination thereof.

Aspect 12. The polycarbonate composition of any one of the preceding aspects, wherein the bromine-containing polycarbonate copolymer comprises first carbonate repeating units derived from bisphenol-A and second repeating brominated carbonate units derived from 2,2',6,6'-tetrabromo-4,4'-isopropylidenediphenol.

Aspect 12a. The polycarbonate composition of any one of the preceding aspects, wherein the bromine-containing polycarbonate copolymer comprises 10 to 50 wt%, 15 to 40 wt%, 20 to 30 wt%, or 24 to 27.5 wt% bromine content, each based on the weight of the bromine-containing polycarbonate.

Aspect 13a. The polycarbonate composition of any one of the preceding aspects, wherein the polycarbonate composition comprises 10 to 70 wt% of a bromine-containing polycarbonate copolymer present in an amount effective to provide 5 to 10 wt% bromine content; 5 to 60 wt% of a poly(carbonate-siloxane) composition comprising a poly(carbonate siloxane) comprising less than 10 wt% siloxane, present in an amount effective to provide 0.5 to 10 wt%, or 2 to 6 wt% of total siloxane, based on the total weight of the polycarbonate composition; 5 to 30 wt% of a glass-containing reinforcing agent; optionally, 0.1 to 40 wt% of a homopolycarbonate; optionally, up to 20 wt% of a mineral filler, preferably wherein the mineral filler comprises talc, kaolin, calcium silicate, calcinated kaolin, calcium carbonate, wollastonite, or a combination thereof; optionally, an organophosphorous flame retardant in amount effective to provide up to 1.5 wt% of phosphorous, based on the total weight of the polycarbonate composition; and optionally, up to 10 wt% of an additive composition, wherein the amount of bromine-containing polycarbonate copolymer, poly(carbonate-siloxane), glass-containing reinforcing agent, optional homopolycarbonate, optional mineral filler, optional organophosphorous flame retardant, and optional additive composition total 100 wt%.

Aspect 13b. The polycarbonate composition of any one of the preceding aspects comprising 10 to 70 wt% of a bromine-containing polycarbonate copolymer present in an amount effective to provide 5 to 10 wt% bromine content; 5 to 60 wt% of a poly(carbonate-siloxane) composition comprising a combination of a poly(carbonate siloxane) comprising less than 10 wt% siloxane and poly(carbonate siloxane) comprising 10 to 30 wt% siloxane, wherein the poly(carbonate-siloxane) composition is present in an amount effective to provide 0.5 to 10 wt%, or 2 to 6 wt% of total siloxane, based on the total weight of the polycarbonate composition; 5 to 30 wt% of a glass-containing reinforcing agent; optionally, 0.1 to 40 wt% of a homopolycarbonate; optionally, up to 20 wt% of a mineral filler, preferably wherein the mineral filler comprises talc, kaolin, calcium silicate, calcinated kaolin, calcium carbonate, wollastonite, or a combination thereof; optionally, an organophosphorous flame retardant in amount effective to provide up to 1.5 wt% of phosphorous, based on the total weight of the polycarbonate composition; and optionally, up to 10 wt% of an additive composition, wherein the amount of bromine-containing polycarbonate copolymer, poly(carbonate-siloxane), glass-containing reinforcing agent, optional homopolycarbonate, optional mineral filler, optional organophosphorous flame retardant, and optional additive composition total 100 wt%.

Aspect 13c. The polycarbonate composition of any one of the preceding aspects comprising 10 to 70 wt% of a bromine-containing polycarbonate copolymer present in an amount effective to provide 10 to 20 wt%, or 15 to 20 wt% bromine content; 5 to 20 wt% of a poly(carbonate-siloxane) composition comprising a poly(carbonate siloxane) comprising 30 to 70 wt% siloxane, wherein the poly(carbonate-siloxane) composition is present in an amount effective to provide 0.5 to 10 wt%, or 2 to 6 wt% of total siloxane, based on the total weight of the polycarbonate composition; 5 to 30 wt% of a glass-containing reinforcing agent; optionally, 0.1 to 40 wt% of a homopolycarbonate; optionally, up to 20 wt% of a mineral filler, preferably wherein the mineral filler comprises talc, kaolin, calcium silicate, calcinated kaolin, calcium carbonate, wollastonite, or a combination thereof; optionally, an organophosphorous flame retardant in amount effective to provide up to 1.5 wt% of phosphorous, based on the total weight of the polycarbonate composition; and optionally, up to 10 wt% of an additive composition, wherein the amount of bromine-containing polycarbonate copolymer, poly(carbonate-siloxane), glass-containing reinforcing agent, optional homopolycarbonate, optional mineral filler, optional organophosphorous flame retardant, and optional additive composition total 100 wt%.

Aspect 13d. The polycarbonate composition of any one of the preceding aspects comprising 10 to 70 wt% of a bromine-containing polycarbonate copolymer present in an amount effective to provide 10 to 20 wt%, or 15 to 20 wt% bromine content; 5 to 60 wt% of a poly(carbonate-siloxane) composition comprising a combination of a poly(carbonate siloxane) comprising 30 to 70 wt% siloxane and a poly(carbonate siloxane) comprising less than 10 wt% siloxane, wherein the poly(carbonate-siloxane) composition is present in an amount effective to provide 0.5 to 10 wt%, or 2 to 6 wt% of total siloxane, based on the total weight of the polycarbonate composition; 5 to 30 wt% of a glass-containing reinforcing agent; optionally, 0.1 to 40 wt% of a homopolycarbonate; optionally, up to 20 wt% of a mineral filler, preferably wherein the mineral filler comprises talc, kaolin, calcium silicate, calcinated kaolin, calcium carbonate, wollastonite, or a combination thereof; optionally, an organophosphorous flame retardant in amount effective to provide up to 1.5 wt% of phosphorous, based on the total weight of the polycarbonate composition; and optionally, up to 10 wt% of an additive composition, wherein the amount of bromine-containing polycarbonate copolymer, poly(carbonate-siloxane), glass-containing reinforcing agent, optional homopolycarbonate, optional mineral filler, optional organophosphorous flame retardant, and optional additive composition total 100 wt%.

Aspect 13e. The polycarbonate composition of any one of the preceding aspects, wherein the homopolycarbonate is present and comprises a bisphenol A homopolycarbonate comprising an average molecular weight is 28,000 to 45,000 grams per mole, as determined by GPC using polystyrene standards and calculated for polycarbonate.

Aspect 14. An article, comprising the polycarbonate composition of any one of the preceding aspects, preferably wherein the article is a railway component, preferably an interior railway component, more preferably wherein the article comprises a seat component, an extruded interior cladding, a molded interior cladding, a side wall, a front wall, an end wall, a partition, a room divider, a flap, a box, a hood, a louvre, a ceiling panel, a table tray, a head rest, a privacy divider, a center console, an arm rest, a leg rest, a food tray, an end bay, a shroud, a kick panel, a foot well, literature pocket, a monitor, a bezel, a line replaceable unit, a foot bar, a luggage rack, a luggage container, a luggage compartment, a floor composite, a wall composite, an air duct, a strip, a device for passenger information, a window frame, an interior lining, an interior vertical surface, an interior door, a lining for an internal door, a lining for an external door, an interior horizontal surface, an electrical component, or a lighting component.

Aspect 15. A method for forming the article of aspect 14, the method comprising molding, casting, or extruding the polycarbonate composition.

The compositions, methods, and articles may alternatively comprise, consist of, or consist essentially of, any appropriate materials, steps, or components herein disclosed. The compositions, methods, and articles may additionally, or alternatively, be formulated so as to be devoid, or substantially free, of any materials (or species), steps, or components, which are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or, more specifically, 5 wt% to 20 wt%", is inclusive of the endpoints and all intermediate values of the ranges of "5 wt% to 25 wt%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some aspects", "one or more aspects", and so forth, means that a particular element described in connection with the aspect is included in at least one aspect described herein, and may or may not be present in other aspects. In addition, it is to be understood that the described elements may be combined in any suitable manner in the various aspects. A "combination thereof" is open and includes any combination comprising at least one of the listed components or properties optionally together with a like or equivalent component or property not listed

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs. All cited patents, patent applications, and other references are incorporated herein by reference in their entirety. However, if a term in the present application contradicts or conflicts with a term in the incorporated reference, the term from the present application takes precedence over the conflicting term from the incorporated reference.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylaryl" means an aryl group substituted with an alkyl group. "Arylalkyl" means an alkyl group substituted with an aryl group (e.g., benzyl). The prefix "halo" means a group or compound including one more of a fluoro, chloro, bromo, or iodo substituent. A combination of different halo groups (e.g., bromo and fluoro) may be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituent instead of at least one (e.g., 1, 2, 3, or 4) hydrogen atom that may each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, a C₃₋₁₂ heteroaryl, or a combination thereof, provided that the substituted atom's normal valence is not exceeded.

While particular aspects have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A polycarbonate composition comprising a bromine-containing polycarbonate copolymer, wherein the polycarbonate composition comprises:
10 to 70 wt% of a bromine-containing polycarbonate copolymer;
5 to 60 wt% of a poly(carbonate-siloxane), present in an amount effective to provide about 0.5 to about 10 wt% of total siloxane, based on the total weight of the polycarbonate composition;
5 to 30 wt% of a glass-containing reinforcing agent;
optionally, 0.1 to 40 wt% of a homopolycarbonate;
optionally, up to 20 wt% of a mineral filler, preferably wherein the mineral filler comprises talc, kaolin, calcium silicate, calcinated kaolin, calcium carbonate, wollastonite, or a combination thereof;
optionally, an organophosphorous flame retardant in amount effective to provide up to 1.5 wt% of phosphorous, based on the total weight of the polycarbonate composition; and optionally, up to 10 wt% of an additive composition,
wherein the amount of bromine-containing polycarbonate copolymer, poly(carbonate-siloxane), glass-containing reinforcing agent, optional homopolycarbonate, optional mineral filler, optional organophosphorous flame retardant, and optional additive composition total 100 wt%,
wherein a molded or extruded sample of the composition has:
a smoke density after 4 minutes (DS-4) of 300 or less, measured in accordance with ISO 5659-2 on a 3 mm thick plaque at 50 kW/m²;
an integral of smoke density as a function of time after 4 minutes (VOF4) of 600 or less, measured in accordance with ISO 5659-2 on a 3 mm thick plaque at 50 kW/m²;
a maximum average heat release (MAHRE) of 90 kW/m² or less, measured in accordance with ISO 5660-1 on a 3 mm thick plaque at 50 kW/m²;
a critical heat flux at extinguishment (CFE) of 20 kW/m² or greater, measured in accordance with ISO 5658-2 on a 3 mm thick plaque; or
a combination thereof.
